(19) Europäisches Patentamt
European Patent Office
Office européen des brevets

(11) EP 4 316 834 A1

(12) EUROPEAN PATENT APPLICATION
published in accordance with Art. 153(4) EPC

(43) Date of publication:
07.02.2024 Bulletin 2024/06

(21) Application number: 22781055.3

(22) Date of filing: 30.03.2022

(51) International Patent Classification (IPC):
*B32B 27/32* *(2006.01)* *C08F 210/16* *(2006.01)*
*C08L 23/08* *(2006.01)*

(52) Cooperative Patent Classification (CPC):
B32B 27/32; C08F 210/16; C08L 23/08

(86) International application number:
PCT/JP2022/015847

(87) International publication number:
WO 2022/210844 (06.10.2022 Gazette 2022/40)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 31.03.2021 JP 2021062158

(71) Applicants:
- Mitsui Chemicals, Inc.
  Tokyo 104-0028 (JP)
- Prime Polymer Co., Ltd.
  Tokyo 104-0028 (JP)

(72) Inventors:
- MATSUBARA, Shinya
  Ichihara-shi, Chiba 299-0108 (JP)
- HATO, Kazuki
  Ichihara-shi, Chiba 299-0108 (JP)
- TAMURA, Naoya
  Sodegaura-shi, Chiba 299-0265 (JP)
- TANAKA, Youichi
  Sodegaura-shi, Chiba 299-0265 (JP)
- KENGOYAMA, Chihiro
  Sodegaura-shi, Chiba 299-0265 (JP)
- UEMATSU, Yudai
  Kuga-gun, Yamaguchi 740-0061 (JP)
- YOSHINO, Shota
  Kuga-gun, Yamaguchi 740-0061 (JP)

(74) Representative: J A Kemp LLP
80 Turnmill Street
London EC1M 5QU (GB)

# (54) ETHYLENE-a-OLEFIN COPOLYMER, THERMOPLASTIC RESIN COMPOSITION, AND FILM

(57) To provide an ethylene-α-olefin copolymer capable of producing a shaped article (in particular, a film) having excellent mechanical strength and well-balanced transparency and blocking resistance with excellent formability. A copolymer of ethylene and one or more α-olefins having 4 to 10 carbon atoms, the copolymer satisfying the following requirements (1) to (6):
(1) Density of 890 to 925 kg/$m^3$;
(2) MFR (190°C, 2.16 kg load) of 0.1 g/10 minutes or more and less than 3.0 g/10 minutes;
(3) MT (melt tension)/η* (shear viscosity) of $1.20 \times 10^{-4}$ to $2.90 \times 10^{-4}$ g/P;
(4) $0.01 \times 10^{-13} \times Mw^{3.4} \leq \eta_0$ (zero shear viscosity) $\leq 3.5 \times 10^{-13} \times Mw^{3.4}$;
(5) $-7.0 \leq Mz/Mw - Mw/Mn \leq 2.0$;
(6) Multiple peaks in melting curve of DSC.

EP 4 316 834 A1

## Description

### Technical Field

The present invention relates to an ethylene-α-olefin copolymer and a thermoplastic resin composition including the ethylene-α-olefin copolymer, and further relates to a film and a multilayer film including the same.

### Background Art

Ethylene polymers are used in various shaping techniques and applications, and various properties are required for ethylene polymers depending on the shaping technique and application. For example, in formation with a T-die, a neck-in occurs in which the ends of a film are shrunk to the center. When the neck-in occurs, a phenomenon in which the film width is reduced and the film end becomes thicker than the center of the film is generated. An occurrence of a large neck-in worsens the yield of the product and causes a defect such that the product with the desired width cannot be made. Further, in hollow molding, defects such as drooping or breaking of the molten film may occur, and in inflation molding, defects such as shaking or breaking of the molten film may occur. To reduce these defects, it is necessary to select ethylene polymers with high melt tension relative to the molecular weight.

Ethylene polymers without long chain branches obtained with a metallocene catalyst have excellent mechanical strength, but also have problems in formability. For example, the neck-in becomes larger in formation with a T-die, drooping of the molten film occurs in hollow molding, and the film wrinkles occur in inflation molding due to the shaking of the molten film. High-pressure low-density polyethylene has excellent moldability due to its high melt tension, but because it has complex long chain branches, it is inferior to mechanical strength such as tensile strength, tear strength, or impact strength.

To solve such problems, various ethylene polymers into which long chain branches are introduced are disclosed. Patent Literature 1 proposes a composition including a high-pressure low-density polyethylene and an ethylene polymer obtained using a metallocene catalyst. However, when the content of the high-pressure low-density polyethylene is large, it is expected that mechanical strength such as tensile strength, tear strength, or impact strength is inferior. When the content of the high-pressure low-density polyethylene is small, the melt tension is not sufficiently improved, thus deterioration in formability such as a large neck-in is expected.

Patent Literature 2 discloses an ethylene polymer obtained by solution polymerization in the presence of a catalyst including ethylene bis(indenyl)hafnium dichloride and methylalumoxane. Patent Literature 3 discloses an ethylene polymer obtained by gas phase polymerization in the presence of a catalyst including ethylene bis(indenyl)zirconium dichloride carried on silica and methylalumoxane. Patent Literature 4 discloses an ethylene polymer obtained by solution polymerization in the presence of a constrained geometry catalyst. Patent Literature 5 discloses an ethylene polymer obtained by gas phase polymerization in the presence of a catalyst including $Me_2Si(2\text{-}Me\text{-}Ind)_2$ racemic and meso isomers carried on silica and methylalumoxane. It is described that these ethylene polymers have improved melt tension and excellent formability compared to linear ethylene polymers without long chain branches. However, since their neck-in is still large, it is expected that the improvement of formability is insufficient, and that the improvement of blocking resistance of the film is also insufficient. When ethylene polymers are used in films, it is common to add anti-blocking agents to prevent blocking. However, in some applications, a large amount of addition of anti-blocking agents is not preferred in view of cost increase and content hygiene. Thus, it is required to provide a film having excellent blocking resistance even without using an anti-blocking agent.

Patent Literature 6, 7, and 8 discloses ethylene polymers that satisfy a particular relationship between intrinsic viscosity and weight-average molecular weight, a particular relationship between melt tension and shear viscosity, or a particular relationship between zero shear viscosity and weight-average molecular weight. These ethylene polymers have improved take-off surging (draw resonance) and improved neck-in in formation with a T-die and formability in inflation molding compared to conventional ethylene polymers into which long chain branches are introduced using a metallocene catalyst. However, further improvements in mechanical strength and improvements in transparency are required. The blocking resistance is higher as the external haze is higher due to the small unevenness of the film surface. However, from the viewpoint of visibility of the contents and defect inspection in the film, a film having well-balanced transparency and blocking resistance is required. Further, in the cases where ethylene polymers are used in, for example, bottles, the improvement in transparency is desired.

### Citation List

#### Patent Literature

Patent Literature 1: JPH07-026079A
Patent Literature 2: JPH02-276807A
Patent Literature 3: JPH04-213309A
Patent Literature 4: WO93/08221
Patent Literature 5: JPH08-311260A
Patent Literature 6: JP2006-233207A
Patent Literature 7: JP2008-31380A
Patent Literature 8: JP2009-197225A

## Summary of Invention

### Technical Problem

An object of the present invention is to provide an ethylene-α-olefin copolymer capable of producing a shaped article (in particular, a film) having excellent mechanical strength and well-balanced transparency and blocking resistance with excellent formability compared to conventionally known ethylene polymers, and to provide a thermoplastic resin composition including the ethylene-α-olefin copolymer, and a film obtained from the polymer or the thermoplastic resin composition.

### Solution to Problem

The present inventors have intensively studied, and as a result, have found an ethylene-α-olefin copolymer having excellent mechanical strength, and being capable of producing a molding (in particular, a film) with well-balanced transparency and blocking resistance with excellent formability by imparting certain melt properties and molecular structures in a polymer, and have completed the present invention.

The present invention relates to, for example, the following [1] to [6].

[1] An ethylene-α-olefin copolymer which is a copolymer of ethylene and one or more α-olefins having 4 to 10 carbon atoms, and which satisfies the following requirements (1) to (6) :

(1) the density is in a range of 890 $kg/m^3$ or more and 925 $kg/m^3$ or less;
(2) the melt flow rate (MFR) at 190°C and 2.16 kg load is in a range of 0.1 g/10 minutes or more and less than 3.0 g/10 minutes;
(3) the ratio [MT/η* (g/P)] of the melt tension [MT (g)] at 190°C to the shear viscosity [η* (P)] at 200°C and the angular velocity of 1.0 rad/s is in a range of $1.20 \times 10^{-4}$ or more and $2.90 \times 10^{-4}$ or less;
(4) the zero shear viscosity [$\eta_0$ (P)] at 200°C and the weight-average molecular weight (Mw) measured by GPC-viscometry (GPC-VISCO) satisfy the following equation (Eq-1)

$$0.01 \times 10^{-13} \times Mw^{3.4} \leq \eta_0 \leq 3.5 \times 10^{-13} \times Mw^{3.4} \quad \text{(Eq-1)};$$

(5) the number-average molecular weight (Mn), the weight-average molecular weight (Mw), and the Z-average molecular weight (Mz), which are measured by GPC-viscometry (GPC-VISCO), satisfy the following equation (Eq-2)

$$-7.0 \leq Mz/Mw - Mw/Mn \leq 2.0 \quad \text{(Eq-2)};$$

(6) the melting curve obtained by differential scanning calorimetry (DSC) has multiple peaks.

[2] The ethylene-α-olefin copolymer according to [1], further satisfying the following requirement (7):
(7) the ratio Mz/Mw of the Z-average molecular weight (Mz) to the weight-average molecular weight (Mw), which are measured by GPC-viscometry (GPC-VISCO), is in a range of 4.0 or more and 15.0 or less.
[3] The ethylene-α-olefin copolymer according to [1] or [2], further satisfying the following requirement (8):
(8) the intrinsic viscosity [[η] (dl/g)] measured in decalin at 135°C and the weight-average molecular weight (Mw) measured by GPC-viscometry (GPC-VISCO) satisfy the following equation (Eq-3)

$$0.7 \times 10^{-4} \times Mw^{0.776} \leq [\eta] \leq 1.65 \times 10^{-4} \times Mw^{0.776} \quad (Eq-3).$$

[4] A thermoplastic resin composition comprising: the ethylene-α-olefin copolymer according to any of [1] to [3]; and a thermoplastic resin other than the ethylene-α-olefin copolymer.
[5] A film comprising the ethylene-α-olefin copolymer according to any of [1] to [3].
[6] A multilayer film comprising a layer comprising the ethylene-α-olefin copolymer according to any of [1] to [3].

Advantageous Effects of Invention

According to the ethylene-α-olefin copolymer and the thermoplastic resin composition including the polymer of the present invention a shaped article (in particular, a film) having excellent mechanical strength and well-balanced transparency and blocking resistance can be suitably produced with excellent formability.

Description of Embodiments

Hereinafter, the ethylene-α-olefin copolymer according to the present invention is specifically described.

[Ethylene-α-olefin copolymer]

The ethylene-α-olefin copolymer according to the present invention relates to a copolymer of ethylene and one or more α-olefins having 4 to 10 carbon atoms, preferably ethylene and one or more α-olefins having 6 to 10 carbon atoms. Examples of the one or more α-olefins having 4 to 10 carbon atoms used for copolymerization with ethylene include 1-butene, 1-hexene, 4-methyl-1-pentene, 1-octene, and 1-decene.
The ethylene-α-olefin copolymer according to the present invention has the properties shown in (1) to (6) below.

(1) The density is in the range of 890 $kg/m^3$ or more and 925 $kg/m^3$ or less, preferably 900 $kg/m^3$ or more and 925 $kg/m^3$ or less, more preferably 905 $kg/m^3$ or more and 922 $kg/m^3$ or less.

When the density is equal to or more than the lower limit, the formed film surface is less sticky, and when the density is equal to or less than the upper limit, the lowtemperature sealing property of the formed film is good.
Further, by setting the density to a small value such as a value less than 915 $kg/m^3$, a flexible shaped article that cannot be produced with high-pressure low-density polyethylene can be produced.
The density depends on the α-olefin content of the ethylene-α-olefin copolymer. Thus, the lower the α-olefin content, the higher the density, and the higher the α-olefin content, the lower the density. The α-olefin content of an ethylene-α-olefin copolymer is determined by the composition ratio of α-olefin to ethylene (α-olefin/ethylene) in the polymerization system (see, for example, Walter Kaminsky, Makromol. Chem. 193, p.606 (1992)). Thus, by increasing or decreasing the ratio α-olefin/ethylene, an ethylene-α-olefin copolymer having a density in the above range can be produced.
The density is measured as follows.
A strand obtained in the measurement of MFR is heat treated at 100°C for 30 minutes, left at room temperature for additional 1 hour, and then the density is measured by the density gradient tube method.
(2) The melt flow rate (MFR) is in the range of 0.1 g/10 minutes or more and less than 3.0 g/10 minutes, preferably 0.3 g/10 minutes or more and 2.5 g/10 minutes or less, more preferably 0.4 g/10 minutes or more and 2.0 g/10 minutes or less.
When the melt flow rate (MFR) is equal to or more than the lower limit, the shear viscosity of the ethylene-α-olefin copolymer is not too high and the extrusion load is good. When the melt flow rate (MFR) is equal to or less than the upper limit, the mechanical strength of the ethylene-α-olefin copolymer is good.
Melt flow rate (MFR) is heavily dependent on the molecular weight. The smaller the melt flow rate (MFR), the larger the molecular weight. The larger the melt flow rate (MFR), the smaller the molecular weight. It is also known that the molecular weight of an ethylene polymer is determined by the composition ratio of hydrogen and ethylene (hydrogen/ethylene) in the polymerization system (see, for example, Kazuo Soga et al., Catalytic Olefin Polymerization, KODANSHA SCIENTIFIC LTD., 1990, p. 376). Thus, it is possible to increase or decrease the melt flow rate (MFR) of an ethylene polymer by increasing or decreasing hydrogen/ethylene. The melt flow rate (MFR) is measured under conditions of 190°C, 2.16 kg load in accordance with JIS K7210.
(3) The ratio [MT/η* (g/P)] of the melt tension [MT (g)] to the shear viscosity [η* (P)] at 200°C and the angular

velocity of 1.0 rad/s is in the range of $1.20 \times 10^{-4}$ to $2.90 \times 10^{-4}$, preferably $1.30 \times 10^{-4}$ to $2.70 \times 10^{-4}$, more preferably $1.30 \times 10^{-4}$ to $2.45 \times 10^{-4}$.

When MT/η* is equal to or more than the lower limit, the ethylene-α-olefin copolymer has excellent formability due to high melt tension relative to the molecular weight. When MT/η* is equal to or less than the upper limit, the ethylene-α-olefin copolymer is excellent in mechanical strength.

MT/η* depends on the long chain branch content of the ethylene polymer. The greater the long chain branch content, the larger the MT/η*; and the smaller the long chain branch content, the smaller the MT/η*. The long chain branch is defined as a branching structure with a length equal to or greater than the entanglement molecular weight (Me) contained in an ethylene polymer. It is known that melting properties and forming processability of an ethylene polymer are significantly changed by the introduction of the long chain branch (see, e.g., Kazuo Matsuura et al., "Polyethylene Technique Reading Book", Kogyo Chosakai Publishing Co., Ltd., 2001, p. 32, 36).

MT/η* can be adjusted by the type of a component (A) or a solid support (S) in the catalyst for olefin polymerization (X) described below. Also, even when the same catalyst for olefin polymerization (X) is used, Mt/η* can be adjusted by the polymerization conditions or the polymerization process. For example, Mt/η* can be lowered by increasing the ethylene partial pressure. MT/η* near the lower limit can be obtained under the production conditions of Example 3 described below, and MT/η* near the upper limit can be obtained under the production conditions of Example 5 described below.

The melt tension [MT (g)] is measured as follows. The melt tension (MT) (unit; g) is determined by measuring the stress in stretching at a constant speed. For measurement, a capillary rheometer is used (for example, in the Examples described below, CAPILOGRAPH 1D: a capillary rheometer manufactured by Toyo Seiki Seisaku-sho, Ltd. Was used). The conditions are as follows: resin temperature of 190°C, melting time of 6 minutes, barrel diameter of 9.55 mmφ, extrusion speed of 15 mm/min, winding speed of 24 m/min (when the molten filament is cut, winding speed is reduced by 5 m/min), nozzle diameter of 2.095 mmφ, and nozzle length of 8 mm.

The shear viscosity [η* (P)] at 200°C and at the angular velocity 1.0 rad/s is measured as follows. For the shear viscosity (η*), the angular velocity [ω (rad/s)] dispersion of the shear viscosity (η*) is measured at the measuring temperature of 200°C in the range of $0.01 \leq \omega \leq 100$. The measurement is performed with a viscoelasticity measuring device (for example, in the Example described below, Physica MCR301, a viscoelasticity measuring device manufactured by Anton Paar GmbH was used.) and a parallel plate of 25 mmφ as the sample holder. The sample thickness is about 2.0 mm. The measurement point is 5 points per ω digit. The amount of strain is appropriately selected in the range of 3 to 10% so that the torque can be detected in the measurement range and overtorque is prevented.

The sample used for shear viscosity measurement is prepared by press-molding a measurement sample to a thickness of 2 mm using a molding machine (for example, in the Example described below, a press molding machine manufactured by Shinto Metal Industries, Ltd. was used.) under the conditions of a preheating temperature of 190°C, preheating time of 5 minutes, heating temperature of 190°C, heating time of 2 minutes, heating pressure of 100 kgf/$cm^2$, cooling temperature of 20°C, cooling time of 5 minutes, and cooling pressure of 100 kgf/$cm^2$.

(4) The zero shear viscosity [$\eta_0$ (P)] at 200°C and the weight-average molecular weight (Mw) measured by GPC-viscometry (GPC-VISCO) satisfy the following equation (Eq-1).

$$0.01 \times 10^{-13} \times Mw^{3.4} \leq \eta_0 \leq 3.5 \times 10^{-13} \times Mw^{3.4} \quad \text{(Eq-1)}$$

Preferably, the following (Eq-1') is satisfied.

$$0.05 \times 10^{-13} \times Mw^{3.4} \leq \eta_0 \leq 3.0 \times 10^{-13} \times Mw^{3.4} \quad \text{(Eq-1')}$$

More preferably, the following (Eq-1") is satisfied.

$$0.1 \times 10^{-13} \times Mw^{3.4} \leq \eta_0 \leq 2.5 \times 10^{-13} \times Mw^{3.4} \quad \text{(Eq-1")}$$

It is known that when the zero shear viscosity [$\eta_0$ (P)] is log-log plotted against the weight-average molecular weight (Mw), a resin with an extension viscosity that does not exhibit strain hardening, such as a linear ethylene polymer without long chain branches, follows a power law with a slope of 3.4, whereas a resin with an extension viscosity that exhibits strain rate hardening, such as a high-pressure low-density polyethylene, exhibits a zero shear viscosity [$\eta_0$ (P)] lower than the power law (C Gabriel, H. Munstedt, J. Rheol., 47(3), 619 (2003)). When the zero shear viscosity [$\eta_0$ (P)] at 200°C is equal to or less than the upper limit, the extension viscosity of the ethylene polymer exhibits strain rate hardening, so that no take-off surging (draw resonance) occurs.

When a molten resin flows into a die, extensional stress occurs by the extensional flow. When this extensional stress exceeds the critical value, brittle breaking occurs and unstable flow at the die outlet called melt fracture occurs to form micro unevenness on the surface of the shaped article (F.N. Cogswell, Polymer Melt Rheology, Wiley, 1981). When the zero shear viscosity [$\eta_0$ (P)] is in the range described above, the extensional stress increases at the strain rate in general forming processing, and the melt fracture moderately occurs. This melt fracture forms moderate fine unevenness on the film surface, so the resulting film has well-balanced transparency and blocking resistance.

The relationship between the zero shear viscosity [$\eta_0$ (P)] and the weight-average molecular weight (Mw) is believed to depend on the content and length of the long chain branch in the ethylene polymer. Then, it is believed that the higher the long chain branch content and the shorter the length of the long chain branch, the lower the value of the zero shear viscosity [$\eta_0$ (P)], and the lower the long chain branch content, and the longer the length of the long chain branch, the higher the value of the zero shear viscosity [$\eta_0$ (P)].

The zero shear viscosity [$\eta_0$ (P)] can be adjusted by the type of the component (A) or the solid support (S) in the catalyst for olefin polymerization (X) described below . Also, even when the same catalyst for olefin polymerization (X) is used, the zero shear viscosity can be adjusted by the polymerization conditions or the polymerization process. For example, the zero shear viscosity [$\eta_0$ (P)] can be increased by increasing the ethylene partial pressure. The zero shear viscosity [$\eta_0$ (P)] near the lower limit can be obtained under the production conditions of Example 4 described below, and the zero shear viscosity [$\eta_0$ (P)] near the upper limit can be obtained under the production conditions of Example 3 described below.

The zero shear viscosity [$\eta_0$ (P)] at 200°C is measured as follows.

The angular velocity $\omega$ (rad/s) dispersion of the shear viscosity ($\eta^*$) is measured at the measuring temperature of 200°C in the range of $0.01 \le \omega \le 100$. For measurement, a viscoelasticity measuring device is used (for example, in the Example described below, a viscoelasticity measuring device Physica MCR301 manufactured by Anton Paar GmbH was used.) and a parallel plate of 25 mm$\varphi$ is used as the sample holder. The sample thickness is about 2.0 mm. The measurement point is 5 points per $\omega$ digit. The amount of strain is appropriately selected in the range of 3 to 10% so that the torque can be detected in the measurement range and overtorque is prevented.

The sample used for shear viscosity measurement is prepared by press-molding a measurement sample to a thickness of 2 mm using a molding machine (for example, in the Example described below, a press molding machine manufactured by Shinto Metal Industries, Ltd. was used.) under the conditions of preheating temperature of 190°C, preheating time of 5 minutes, heating temperature of 190°C, heating time of 2 minutes, heating pressure of 100 kgf/cm$^2$, cooling temperature of 20°C, cooling time of 5 minutes, and cooling pressure of 100 kgf/cm$^2$.

The zero shear viscosity ($\eta_0$) is calculated by fitting the Carreau model of the equation below to a measured rheological curve [the angular velocity ($\omega$) dispersion of shear viscosity ($\eta^*$)] by nonlinear least squares method.

$$\eta^* = \eta_0[1 + (\lambda\omega)^a]^{(n-1)/a}$$

[$\lambda$ represents a parameter with a dimension of time, a represents a fitting parameter, and n represents a power law index of a material.]

The fitting by the nonlinear least squares method is carried out so that d in the equation below is minimum.

$$d = \sum_{\omega=0.02512}^{100}\left[Log_{10}\eta_{exp}(\omega) - Log_{10}\eta_{calc}(\omega)\right]^2$$

[$\eta_{exp}(\omega)$ represents the measured shear viscosity, and $\eta_{calc}(\omega)$ represents the shear viscosity calculated from the Carreau model.]

The weight-average molecular weight (Mw), for example, is measured by gel permeation chromatography (GPC) as follows.

A differential refractometer and a capillary viscometer are used as the detector, the column temperature is 145°C, o-dichlorobenzene is used as the mobile phase, the flow rate is 1.0 ml/min, the sample concentration is 0.1 wt%, and polystyrene is used as the standard polymer. In the Examples described below, a GPC-viscometer (GPC-VISCO) PL-GPC 220 manufactured by Agilent Technologies was used as a measurement apparatus, two Agilent PLgel Olexis were used for the analysis column, and polystyrene manufactured by TOSOH CORPORATION was used as the standard polystyrene. For the molecular weight calculation, a measured viscosity is calculated with the viscometer and the refractometer, and the number-average molecular weight (Mn), the weight-average molecular weight (Mw), the Z-average molecular weight (Mz), and the molecular weight distribution (Mw/Mn, Mz/Mw) are determined from measured universal calibration.

(5) The number-average molecular weight (Mn), the weight-average molecular weight (Mw), and the Z-average molecular weight (Mz), which are measured by GPC-viscometry (GPC-VISCO), satisfy the following equation (Eq-2).

$$-7.0 \leq Mz/Mw - Mw/Mn \leq 2.0 \quad (Eq\text{-}2)$$

Preferably, the following equation (Eq-2') is satisfied.

$$-6.0 \leq Mz/Mw - Mw/Mn \leq 1.0 \quad (Eq\text{-}2')$$

More preferably, the following equation (Eq-2") is satisfied.

$$-5.0 \leq Mz/Mw - Mw/Mn \leq 0.0 \quad (Eq\text{-}2'')$$

When Mz/Mw - Mw/Mn is large, the molecular weight distribution is extended to the high-molecular weight side. Mz/Mw - Mw/Mn of greater than or equal to the lower limit results in excellent molten film stability, and Mz/Mw - Mw/Mn of equal to or less than the upper limit results in excellent film formability.
Mz/Mw - Mw/Mn can be adjusted by the type of the component (A) or the solid support (S) in the catalyst for olefin polymerization (X) described below, and, even when the same catalyst for olefin polymerization (X) is used, it can be adjusted by the polymerization conditions or the polymerization process. Mz/Mw - Mw/Mn near the lower limit can be obtained under the production conditions of Example 2 described below, and Mz/Mw - Mw/Mn near the upper limit can be obtained under the polymerization conditions of Example 1 described below.
The number-average molecular weight (Mn), the weight-average molecular weight (Mw), and the Z-average molecular weight (Mz) are measured by the methods described above.
(6) The melting curve obtained by differential scanning calorimetry (DSC) has multiple peaks.
When the melting curve has multiple peaks, the components having low melting points is high, and heat sealing property at low temperatures is excellent.
Differential scanning calorimetry (DSC) is measured using a differential scanning calorimeter (for example, in the Examples described below, Diamond DSC manufactured by PerkinElmer, Inc. was used.) as follows.
About 5 mg of the sample is charged into an aluminum pan, heated to 200°C by 10°C/min, held at 200°C for 10 minutes, then cooled to -30°C by 10°C/min, and then heated to 200°C by 10°C/min to obtain an endothermic curve. The presence of two or more peaks in this endothermic curve means that there are multiple peaks in the melting curve obtained by differential scanning calorimetry (DSC).
The ethylene-α-olefin copolymer according to the present invention preferably has the property shown by (7) below.
(7) The ratio (Mz/Mw) of the Z-average molecular weight (Mz) to the weight-average molecular weight (Mw), which are measured by GPC-viscometry (GPC-VISCO), is in the range of 4.0 to 15.0, preferably 5.0 to 12.0, more preferably 6.0 to 10.0. The larger the Mz/Mw, the more high-molecular weight components. When Mz/Mw is equal to or more than the lower limit, it is excellent in blocking resistance, and when Mz/Mw is equal to or less than the upper limit, it is excellent in transparency.
Mz/Mw can be adjusted by the type of thee component (A) or the solid support (S) in the catalyst for olefin polymerization (X) described below , and, even when the same catalyst for olefin polymerization (X) is used, it can be adjusted by the polymerization conditions or the polymerization process. Mz/Mw near the lower limit can be obtained under the production conditions of Example 3 described below, and Mz/Mw near the upper limit can be obtained under the polymerization conditions of Example 4 described below.
The ethylene-α-olefin copolymer according to the present invention preferably has the property shown by (8) below.
(8) The intrinsic viscosity [[η] (dl/g)] measured in decalin at 135°C and the weight-average molecular weight (Mw) measured by GPC-viscometry (GPC-VISCO) satisfy the following equation (Eq-3).

$$0.7 \times 10^{-4} \times Mw^{0.776} \leq [\eta] \leq 1.65 \times 10^{-4} \times Mw^{0.776} \quad (Eq\text{-}3)$$

Preferably, the following (Eq-3') is satisfied.

$$0.7 \times 10^{-4} \times Mw^{0.776} \leq [\eta] \leq 1.40 \times 10^{-4} \times Mw^{0.776} \quad (Eq\text{-}3')$$

More preferably, the following (Eq-3") is satisfied.

$$0.8 \times 10^{-4} \times Mw^{0.776} \leq [\eta] \leq 1.20 \times 10^{-4} \times Mw^{0.776} \quad (Eq\text{-}3'')$$

It is known that when long chain branches are introduced into an ethylene polymer, the intrinsic viscosity [[η] (dl/g)] is reduced relative to the molecular weight compared to a linear ethylene polymer without long chain branches (see, e.g., Walther Burchard, ADVANCES IN POLYMER SCIENCE, 143, Branched PolymerII, p. 137 (1999)). Thus, when the intrinsic viscosity [[η] (dl/g)] is $1.65 \times 10^{-4} \times Mw^{0.776}$ or less, the ethylene polymer has a large number of long chain branches and is excellent in formability and fluidity.

The intrinsic viscosity [[η] (dl/g)] can be adjusted by the type of the component (A) or the solid support (S) in the catalyst for olefin polymerization (X) described below. Also, even when the same catalyst for olefin polymerization (X) is used, the intrinsic viscosity [[η] (dl/g)] can be adjusted by the polymerization conditions or the polymerization process. For example, the intrinsic viscosity [[η] (dl/g)] can be increased by increasing the ethylene partial pressure. The intrinsic viscosity [[η] (dl/g)] near the lower limit can be obtained under the production conditions of Example 4 described below, and the intrinsic viscosity [[η] (dl/g)] near the upper limit can be obtained under the production conditions of Example 2 described below.

The intrinsic viscosity [[η] (dl/g)] is measured using a decalin solvent as follows. About 20 mg of the measurement sample is dissolved in 15 ml of decalin, and the specific viscosity $\eta_{sp}$ is measured in an oil bath at 135°C. To this decalin solution, 5 ml of the decalin solvent is added to dilute the solution, and then the specific viscosity $\eta_{sp}$ is measured in the same manner. This dilution operation was repeated two more times, and as shown in the equation below, a value of $\eta_{sp}/C$ when the concentration (C) is extrapolated to 0 is determined as the intrinsic viscosity [η] (unit; dl/g).

$$[\eta] = \lim(\eta_{sp}/C) \quad (C \to 0)$$

The weight-average molecular weight (Mw) is measured by the method described above.

[Method for producing ethylene-α-olefin copolymer]

Next, a method for producing the ethylene-α-olefin copolymer according to the present invention is described.

The ethylene-α-olefin copolymer according to the present invention can be efficiently produced by polymerizing ethylene and one or more α-olefins having 4 to 10 carbon atoms in the presence of a catalyst for olefin polymerization (X) including the following components.

[Catalyst for olefin polymerization (X)]

The catalyst for olefin polymerization (X) includes a component (A) and a solid support (S) described below.

<Component (A)>

The component (A) is a transition metal compound represented by formula (1) below (hereinafter also referred to as "transition metal compound (1)"). The catalyst for olefin polymerization (X) includes at least one transition metal compound (1). That is, as the component (A), one transition metal compound (1) may be used, or a plurality of transition metal compounds (1) may be used.

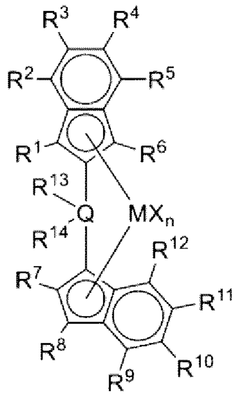

・・・ (1)

In the formula (1), M is a zirconium atom or a hafnium atom, preferably a zirconium atom.

In the formula (1), n is an integer from 1 to 4 selected such that the transition metal compound (1) is electrically neutral, preferably 2.

In the formula (1), X is each independently a hydrogen atom, a halogen atom, a hydrocarbon group having 1 to 20 carbon atoms, a silicon-containing group, an oxygen-containing group, a nitrogen-containing group, or a conjugated diene derivative group, preferably a halogen atom or a hydrocarbon group having 1 to 20 carbon atoms.

Examples of the halogen atom include fluorine, chlorine, bromine, and iodine, and chlorine is particularly preferred.

Examples of the hydrocarbon group having 1 to 20 carbon atoms include:

linear or branched alkyl groups, such as a methyl group, an ethyl group, a 1-propyl group, a 1-butyl group, a 1-pentyl group, a 1-hexyl group, a 1-heptyl group, a 1-octyl group, an iso-propyl group, a sec-butyl group (a butan-2-yl group), a tert-butyl group (a 2-methylpropan-2-yl group), an iso-butyl group (a 2-methylpropyl group), a pentan-2-yl group, a 2-methylbutyl group, an iso-pentyl group (a 3-methylbutyl group), a neopentyl group (a 2,2-dimethylpropyl group), a siamyl group (a 1,2-dimethylpropyl group), an iso-hexyl group (a 4-methylpentyl group), a 2,2-dimethylbutyl group, a 2,3-dimethylbutyl group, a 3,3-dimethylbutyl group, a thexyl group (a 2,3-dimethylbut-2-yl group), and a 4,4-dimethylpentyl group;

linear or branched alkenyl groups or an unsaturated double bond-containing groups, such as a vinyl group, an allyl group, a propenyl group (a prop-1-en-1-yl group), an iso-propenyl group (a prop-1-en-2-yl group), an allenyl group (a prop-1,2-dien-1-yl group), a but-3-en-1-yl group, a crotyl group (a but-2-en-1-yl group), a but-3-en-2-yl group, a methallyl group (a 2-methylallyl group), a but-1,3-dienyl group, a pent-4-en-1-yl group, a pent-3-en-1-yl group, a pent-2-en-1-yl group, an iso-pentenyl group (a 3-methylbut-3-en-1-yl group), a 2-methylbut-3-en-1-yl group, a pent-4-en-2-yl group, or a prenyl group (a 3-methylbut-2-en-1-yl group);

linear or branched alkynyl groups or an unsaturated triple bond-containing groups, such as an ethynyl group, a prop-2-yn-1-yl group, and a propargyl group (a prop-1-yn-1-yl group);

linear or branched alkyl groups and an unsaturated double bond-containing groups, these groups containing an aromatic group, such as a benzyl group, a 2-methylbenzyl group, a 4-methylbenzyl group, a 2,4,6-trimethylbenzyl group, a 3,5-dimethylbenzyl group, a cuminyl group (a 4-iso-propylbenzyl group), a 2,4,6-tri-iso-propylbenzyl group, a 4-tert-butylbenzyl group, a 3,5-di-tert-butylbenzyl group, a 1-phenylethyl group, and a benzhydryl group (a diphenylmethyl group);

cyclic saturated hydrocarbon groups, such as a cyclopropyl group, a cyclobutyl group, a cyclopentyl group, a cyclohexyl group, a cycloheptyl group, a cycloheptatrienyl group, a norbornyl group, a norbornenyl group, a 1-adamantyl group, and a 2-adamantyl group; and

aromatic substituents, such as a phenyl group, a tolyl group (a methylphenyl group), a xylyl group (a dimethylphenyl group), a mesityl group (a 2,4,6-trimethylphenyl group), a cumenyl group (an iso-propylphenyl group), a duryl group (a 2,3,5,6-tetramethylphenyl group), a 2,6-di-iso-propylphenyl group, a 2,4,6-tri-iso-propylphenyl group, a 4-tert-butylphenyl group, a 3,5-di-tert-butylphenyl group, a naphthyl group, a biphenyl group, a ter-phenyl group, a binaphthyl group, an acenaphthalenyl group, a phenanthryl group, an anthracenyl group, a pyrenyl group, or a ferrocenyl group,

and preferably a methyl group, an iso-butyl group, a neopentyl group, a siamyl group, a benzyl group, a phenyl group, a tolyl group, a xylyl group, a mesityl group, and a cumenyl group.

The hydrocarbon group having 1 to 20 carbon atoms may be a halogen-substituted hydrocarbon group in which a part or all of the hydrogen atoms of the hydrocarbon group having 1 to 20 carbon atoms are each substituted with a

halogen atom. Examples thereof include a fluoromethyl group, a trifluoromethyl group, a trichloromethyl group, a 2,2,2-trifluoroethyl group, a pentafluoroethyl group, a pentachloroethyl group, a pentafluorophenylmethyl group, a fluorophenyl group, a difluorophenyl group, a trifluorophenyl group, a tetrafluorophenyl group, a pentafluorophenyl group, a trifluoromethylphenyl group, and a bistrifluoromethylphenyl group, and preferably a pentafluorophenyl group.

Examples of the silicon-containing group include a trimethylsilyl group, a triethylsilyl group, a tri-iso-propylsilyl group, a diphenylmethylsilyl group, a tert-butyldimethylsilyl group, a tert-butyldiphenylsilyl group, a triphenylsilyl group, a tris(trimethylsilyl)silyl group, and a trimethylsilylmethyl group, and preferably a trimethylsilylmethyl group.

Examples of the oxygen-containing group include a methoxy group, an ethoxy group, an n-propoxy group, an iso-propoxy group, an allyloxy group, an n-butoxy group, a secbutoxy group, an iso-butoxy group, a tert-butoxy group, a benzyloxy group, a methoxymethoxy group, a phenoxy group, a 2,6-dimethylphenoxy group, a 2,6-di-iso-propylphenoxy group, a 2,6-di-tert-butylphenoxy group, a 2,4,6-trimethylphenoxy group, a 2,4,6-tri-iso-propylphenoxy group, an acetoxy group, a pivaloyloxy group, a benzoyloxy group, a trifluoroacetoxy group, a perchlorate anion, a periodate anion, and preferably a methoxy group, an ethoxy group, an iso-propoxy group, and a tert-butoxy group.

Examples of the nitrogen-containing group include an amino group, a cyano group, a methylamino group, a dimethylamino group, an ethylamino group, a diethylamino group, an allylamino group, a diallylamino group, a benzylamino group, a dibenzylamino group, a pyrrolidinyl group, a piperidinyl group, a morpholyl group, a pyrrolyl group, and a bistriflylimide group.

Examples of the conjugated diene derivative group include a 1,3-butadienyl group, an isoprenyl group (a 2-methyl-1,3-butadienyl group), a piperylenyl group (a 1,3-pentadienyl group), a 2,4-hexadienyl group, a 1,4-diphenyl-1,3-pentadienyl group, and a cyclopentadienyl group, and preferably a 1,3-butadienyl group and a 1,3-pentadienyl group.

In the formula (1), Q is a carbon atom or a silicon atom, preferably a silicon atom.

In the formula (1), $R^1$ to $R^{14}$ are each independently a hydrogen atom, a hydrocarbon group having 1 to 20 carbon atoms, a silicon-containing group having 1 to 20 carbon atoms, an oxygen-containing group having 1 to 20 carbon atoms, or a nitrogen-containing group having 1 to 20 carbon atoms, preferably a hydrogen atom, a hydrocarbon group having 1 to 20 carbon atoms, and an oxygen-containing group having 1 to 20 carbon atoms.

Examples of the hydrocarbon group having 1 to 20 carbon atoms as $R^1$ to $R^{14}$ include a linear or branched alkyl group, such as a methyl group, an ethyl group, a 1-propyl group, a 1-butyl group, a 1-pentyl group, a 1-hexyl group, a 1-heptyl group, a 1-octyl group, an iso-propyl group, a sec-butyl group (a butan-2-yl group), tert-butyl group (a 2-methylpropan-2-yl group), an iso-butyl group (a 2-methylpropyl group), a pentan-2-yl group, a 2-methylbutyl group, an iso-pentyl group (a 3-methylbutyl group), a neopentyl group (a 2,2-dimethylpropyl group), a siamyl group (a 1,2-dimethylpropyl group), an iso-hexyl group (a 4-methylpentyl group), a 2,2-dimethylbutyl group, a 2,3-dimethylbutyl group, a 3,3-dimethylbutyl group, a thexyl group (a 2,3-dimethylbut-2-yl group), and a 4,4-dimethylpentyl group;

linear or branched alkenyl groups or an unsaturated double bond-containing groups, such as a vinyl group, an allyl group, a propenyl group (a prop-1-en-1-yl group), an iso-propenyl group (a prop-1-en-2-yl group), an allenyl group (a prop-1,2-dien-1-yl group), a but-3-en-1-yl group, a crotyl group (a but-2-en-1-yl group), a but-3-en-2-yl group, a methallyl group (a 2-methylallyl group), a but-1,3-dienyl group, a pent-4-en-1-yl group, a pent-3-en-1-yl group, a pent-2-en-1-yl group, an iso-pentenyl group (a 3-methylbut-3-en-1-yl group), a 2-methylbut-3-en-1-yl group, a pent-4-en-2-yl group, and a prenyl group (a 3-methylbut-2-en-1-yl group);
linear or branched alkynyl groups or an unsaturated triple bond-containing groups, such as an ethynyl group, a prop-2-yn-1-yl group, and a propargyl group (a prop-1-yn-1-yl group);
linear or branched alkyl groups and an unsaturated double bond-containing groups, those containing an aromatic group, such as a benzyl group, a 2-methylbenzyl group, a 4-methylbenzyl group, a 2,4,6-trimethylbenzyl group, a 3,5-dimethylbenzyl group, a cuminyl group (a 4-iso-propylbenzyl group), a 2,4,6-tri-iso-propylbenzyl group, a 4-tert-butylbenzyl group, a 3,5-di-tert-butylbenzyl group, a 1-phenylethyl group, a benzhydryl group (a diphenylmethyl group), and a pentafluorophenylmethyl group;
cyclic saturated hydrocarbon groups, such as a cyclopropyl group, a cyclobutyl group, a cyclopentyl group, a cyclohexyl group, a cycloheptyl group, a cycloheptatrienyl group, a norbornyl group, a norbornenyl group, a 1-adamantyl group, and a 2-adamantyl group; and
aromatic substituents, such as a phenyl group, a tolyl group (a methylphenyl group), a xylyl group (a dimethylphenyl group), a mesityl group (a 2,4,6-trimethylphenyl group), a cumenyl group (an iso-propylphenyl group), a duryl group (a 2,3,5,6-tetramethylphenyl group), a 2,6-di-iso-propylphenyl group, a 2,4,6-tri-iso-propylphenyl group, a 4-tert-butylphenyl group, a 3,5-di-tert-butylphenyl group, a naphthyl group, a biphenyl group, a ter-phenyl group, a binaphthyl group, an acenaphthalenyl group, a phenanthryl group, an anthracenyl group, a pyrenyl group, and a ferrocenyl group; and
halogen-substituted hydrocarbon groups in which a part or all of the hydrogen atoms of the hydrocarbon group having 1 to 20 carbon atoms are each substituted with a halogen atom, such as a fluoromethyl group, a trifluoromethyl group, a trichloromethyl group, a 2,2,2-trifluoroethyl group, a pentafluoroethyl group, a pentachloroethyl group, a

pentafluorophenylmethyl group, a fluorophenyl group, a difluorophenyl group, a trifluorophenyl group, a tetrafluorophenyl group, a pentafluorophenyl group, a trifluoromethylphenyl group, and a bistrifluoromethylphenyl group,

and preferably a methyl group, an ethyl group, a 1-propyl group, a 1-butyl group, a 1-pentyl group, a 1-hexyl group, a 1-heptyl group, a 1-octyl group, an iso-propyl group, a sec-butyl group, a tert-butyl group, an iso-butyl group, an iso-pentyl group, a neopentyl group, a tert-pentyl group, an allyl group, a cyclopropyl group, a cyclobutyl group, a cyclopentyl group, a cyclohexyl group, a cycloheptyl group, a cyclooctyl group, a cyclooctenyl group, a norbornyl group, a bicyclo[2.2.2]octane-1-yl group, a 1-adamantyl group, a 2-adamantyl group, a benzyl group, a benzhydryl group, a cumyl group, a 1,1-diphenylethyl group, a trityl group, a 2-phenylethyl group, a 3-phenylpropyl group, a cinnamyl group, a phenyl group, a tolyl group, a xylyl group, a mesityl group, a cumenyl group, a 2,6-di-iso-propylphenyl group, a 2,4,6-tri-iso-propylphenyl group, a 4-tert-butylphenyl group, a 3,5-di-tert-butylphenyl group, a 4-adamantylphenyl group, a naphthyl group, a biphenyl group, a tert-phenyl group, a binaphthyl group, a phenanthryl group, an anthracenyl group, a ferrocenyl group, and a pentafluorophenyl group.

Examples of the silicon-containing group having 1 to 20 carbon atoms as $R^1$ to $R^{14}$ preferably include a trimethylsilyl group, a triethylsilyl group, a tri-iso-propylsilyl group, a tert-butyldimethylsilyl group, a triphenylsilyl group, a cyclopentadienyldimethylsilyl group, a cyclopentadienyldiphenylsilyl group, an indenyldimethylsilyl group, a fluorenyldimethylsilyl group, a 4-trimethylsilylphenyl group, a 4-triethylsilylphenyl group, a 4-tri-iso-propylsilylphenyl group, a 3,5-bis(trimethylsilyl)phenyl group, and include a trimethylsilyl group, a triethylsilyl group, a tert-butyldimethylsilyl group, a 4-trimethylsilylphenyl group, a 4-triethylsilylphenyl group, a 4-tri-iso-propylsilylphenyl group, and a 3,5-bis(trimethylsilyl)phenyl group.

Examples of the oxygen-containing group having 1 to 20 carbon atoms as $R^1$ to $R^{14}$ include a methoxy group, an ethoxy group, an iso-propoxy group, an allyloxy group, an n-butoxy group, a tert-butoxy group, a plenyloxy group, a benzyloxy group, a phenoxy group, a naphthoxy group, a toluyloxy group, an iso-propylphenoxy group, an allylphenoxy group, a tert-butylphenoxy group, a methoxyphenoxy group, a biphenyloxy group, a binaphthyloxy group, an allyloxymethyl group, a benzyloxymethyl group, a phenoxymethyl group, a methoxyethyl group, a methoxyallyl group, a benzyloxyallyl group, a phenoxyallyl group, a dimethoxymethyl group, a dioxolanyl group, a tetramethyl dioxolanyl group, a dioxanyl group, a dimethyldioxanyl group, a methoxyphenyl group, an iso-propoxyphenyl group, an allyloxyphenyl group, a phenoxyphenyl group, a methylenedioxyphenyl group, a 3,5-dimethyl-4-methoxyphenyl group, a 3,5-di-tert-butyl-4-methoxyphenyl group, a furyl group, a methylfuryl group, a tetrahydropyranyl group, a furfuryl group, a benzofuryl group, and a dibenzofuryl group, and preferably a methoxy group, an iso-propoxy group, a tert-butoxy group, an allyloxy group, a phenoxy group, a dimethoxymethyl group, a dioxolanyl group, a methoxyphenyl group, an iso-propoxyphenyl group, an allyloxyphenyl group, a phenoxyphenyl group, a 3,5-dimethyl-4-methoxyphenyl group, a 3,5-di-tert-butyl-4-methoxyphenyl group, a furyl group, a methylfuryl group, a benzofuryl group, and a dibenzofuryl group.

Examples of the nitrogen-containing group having 1 to 20 carbon atoms as $R^1$ to $R^{14}$ include an amino group, a dimethylamino group, a diethylamino group, an allylamino group, a benzylamino group, a dibenzylamino group, a pyrrolidinyl group, a piperidinyl group, a morpholyl group, a dimethylaminomethyl group, a benzylaminomethyl group, a pyrrolidinylmethyl group, a dimethylaminoethyl group, a pyrrolidinylethyl group, a dimethylaminopropyl group, a pyrrolidinylpropyl group, a dimethylaminoallyl group, a pyrrolidinylallyl group, an aminophenyl group, a dimethylaminophenyl group, a 3,5-dimethyl-4-dimethylaminophenyl group, a 3,5-di-iso-propyl-4-dimethylaminophenyl group, a julolidinyl group, a tetramethyljulolidinyl group, a pyrrolidinylphenyl group, a pyrrolylphenyl group, a carbazolylphenyl group, a di-tert-butylcarbazolylphenyl group, a pyrrolyl group, a pyridyl group, a quinolyl group, a tetrahydroquinolyl group, an iso-quinolyl group, a tetrahydro-iso-quinolyl group, an indolyl group, an indolinyl group, a carbazolyl group, a di-tert-butylcarbazolyl group, an imidazolyl group, a dimethylimidazolidinyl group, a benzimidazolyl group, an oxazolyl group, an oxazolidinyl group, and a benzoxazolyl group, and preferably an amino group, a dimethylamino group, a diethylamino group, a pyrrolidinyl group, a dimethylaminophenyl group, a 3,5-dimethyl-4-dimethylaminophenyl group, a 3,5-di-iso-propyl-4-dimethylaminophenyl group, a julolidinyl group, a tetramethyljulolidinyl group, a pyrrolidinylphenyl group, a pyrrolyl group, a pyridyl group, a carbazolyl group, and an imidazolyl group.

In the formula (1), the adjacent substituents of $R^1$ to $R^6$ (for example, $R^1$ and $R^2$, $R^2$ and $R^3$, $R^3$ and $R^4$, $R^4$ and $R^5$, and $R^5$ and $R^6$) may be linked to each other to form a ring that may have a substituent. The ring formed in this case is preferably a 5 to 8-membered ring that condensates to the indenyl ring moiety, may have a substituent, and consists of a saturated hydrocarbon (excluding hydrocarbon of the indenyl ring moiety) or an unsaturated hydrocarbon. When there are multiple rings, they may be the same or different from each other. The ring is not particularly limited as long as the effect of the present invention is valid, but the ring is more preferably a 5- or 6-membered ring. In this case, examples of the structure having the ring and the indenyl ring moiety, which is the scaffold, together include a benzoindenyl ring, a tetrahydroindacene ring, and a cyclopentatetrahydronaphthalene ring, and a benzoindenyl ring and a tetrahydroindacene ring are preferred. These rings may have a substituent.

In the formula (1), the adjacent substituents of $R^7$ to $R^{12}$ (e.g., $R^7$ and $R^8$, $R^8$ and $R^9$, $R^9$ and $R^{10}$, $R^{10}$ and $R^{11}$, and $R^{11}$ and $R^{12}$) may be linked to each other to form a ring that may have a substituent. The ring formed in this case

is preferably a 5 to 8-membered ring that condensates to the indenyl ring moiety, may have a substituent, and consists of a saturated hydrocarbon (excluding hydrocarbon of the indenyl ring moiety) or an unsaturated hydrocarbon. When there are multiple rings, they may be the same or different from each other. The ring is not particularly limited as long as the effect of the present invention is valid, but the ring is more preferably a 5- or 6-membered ring. In this case, examples of the structure having the ring and the indenyl ring moiety, which is a scaffold, together include a benzoindenyl ring, a tetrahydroindacene ring, a cyclopentatetrahydronaphthalene ring, a tetrahydrofluorene ring, and a fluorene ring, and preferably a benzoindenyl ring and a tetrahydroindacene ring. These rings may have a substituent.

In the formula (1), $R^{13}$ and $R^{14}$ may be bonded to each other to form a ring containing Q, and these rings may have a substituent. The ring formed in this case is preferably a saturated or unsaturated 3 to 8-membered ring that may have a substituent. The ring is not particularly limited as long as the effect of the present invention is valid, but the ring is preferably a 4 to 6-membered ring. In this case, examples of the structure together with Q include a cyclobutane ring, a cyclopentane ring, a fluorene ring, a silacyclobutane (siletane) ring, a silacyclopentane (silolane) ring, a silacyclohexane (silinane) ring, and a silafluorene ring, and preferably a cyclopentane ring, a silacyclobutane ring, and a silacyclopentane ring. These rings may have a substituent.

Specific examples of the transition metal compound (1) are shown below, but the scope of the present invention is not limited thereby.

For convenience, the ligand structure excluding the moiety represented by MXn (metal moiety) of the transition metal compound (1) is divided into the following seven structures: a 2-indenyl ring moiety, a 1-indenyl ring moiety, indenyl ring moiety's $R^1$, $R^6$ and $R^8$ substituents, indenyl ring moiety's $R^2$, $R^5$, $R^9$ and $R^{12}$ substituents, indenyl ring moiety's $R^3$, $R^4$, $R^{10}$ and $R^{11}$ substituents, a 1-indenyl ring moiety's $R^7$ substituent, and a crosslinking moiety. The abbreviation of the 2-indenyl ring moiety is $\alpha$, the abbreviation of the 1-indenyl ring moiety is $\beta$, the abbreviation of the indenyl ring moiety's $R^1$, $R^6$ and $R^8$ substituents is $\gamma$, the abbreviation of the indenyl ring moiety's $R^2$, $R^5$, $R^9$ and $R^{12}$ substituents is $\delta$, abbreviation of the indenyl ring moiety's $R^3$, $R^4$, $R^{10}$ and $R^{11}$ substituents is $\varepsilon$, the abbreviation of the 1-indenyl ring moiety's $R^7$ substituent is $\zeta$, and the abbreviation of the crosslinking moiety is $\eta$. These abbreviations of each substituent are shown in [Table 1] to [Table 7].

[Table 1]

| 2-Indenyl ring moiety | |
|---|---|
| 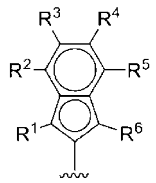 | $\alpha$-1 |
| 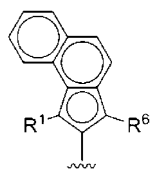 | $\alpha$-2 |
| 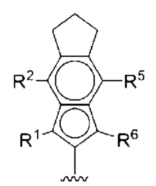 | $\alpha$-3 |
| 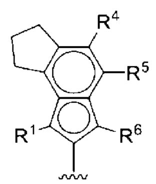 | $\alpha$-4 |

(continued)

| 2-Indenyl ring moiety | |
|---|---|
| 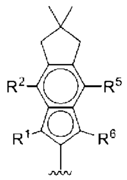 | α-5 |
| 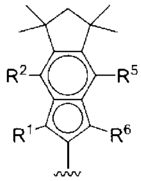 | α-6 |
| 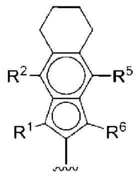 | α-7 |
| 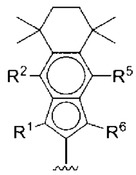 | α-8 |

[Table 2]

| 1-Indenyl ring moiety | |
|---|---|
| 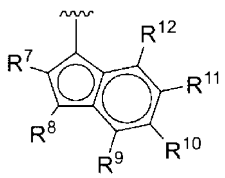 | β-1 |
| 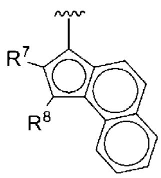 | β-2 |
| 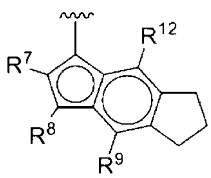 | β-3 |

(continued)

| 1-Indenyl ring moiety | |
|---|---|
| 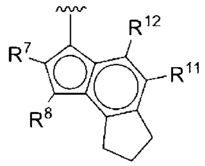 | β-4 |
| 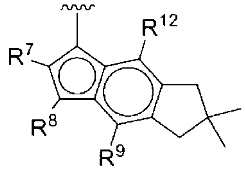 | β - 5 |
| 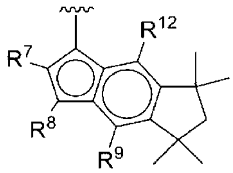 | β-6 |
| 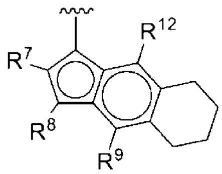 | β-7 |
| 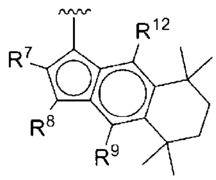 | β-8 |

The wave lines in [Table 1] and [Table 2] above each indicate a site binding with the crosslinking moiety.

[Table 3]

| Indenyl ring's R1, R6 and R8 substituents | |
|---|---|
| γ-1 | Hydrogen |
| γ-2 | Methyl |
| γ-3 | Ethyl |
| γ-4 | n-Propyl |
| γ-5 | Allyl |
| γ-6 | n-Butyl |
| γ-7 | But-3-en-1-yl |
| γ-8 | Benzyl |
| γ-9 | Pentafluorophenylmethyl |
| γ-10 | Phenyl |
| γ-11 | Tolyl |
| γ-12 | Naphthyl |

(continued)

| Indenyl ring's R1, R6 and R8 substituents | |
|---|---|
| γ-13 | 4-tert-Butylphenyl |
| γ-14 | 5-Methyl-2-furyl |
| γ-15 | 5-Methyl-2-thienyl |

The $R^1$, $R^6$ and $R^8$ substituents in [Table 3] above may be the same or different from each other in their combinations.

[Table 4]

| Indenyl ring's R2, R5, R9 and R12 substituents | |
|---|---|
| δ-1 | Hydrogen |
| δ-2 | Methyl |
| δ-3 | Methoxy |
| δ-4 | Ethyl |
| δ-5 | Ethoxy |
| δ-6 | n-Propyl |
| δ-7 | iso-Propyl |
| δ-8 | Allyl |
| δ-9 | iso-Propoxy |
| δ-10 | n-Butyl |
| δ-11 | iso-Butyl |
| δ-12 | sec-Butyl |
| δ-13 | tert-Butyl |
| δ-14 | But-3-en-1-yl |
| δ-15 | Neopentyl |
| δ-16 | Cyclopentyl |
| δ-17 | Cyclohexyl |
| δ-18 | 2,4-Dimethylpentan-2-yl |
| δ-19 | 2,4,4-Trimethylpentan-2-yl |
| δ-20 | Benzyl |
| δ-21 | Pentafluorophenylmethyl |
| δ-22 | Phenyl |
| δ-23 | Phenoxy |
| δ-24 | Tolyl |
| δ-25 | Xylyl |
| δ-26 | Mesityl |
| δ-27 | Anisyl |
| δ-28 | Naphthyl |
| δ-29 | Biphenyl |
| δ-30 | Anthracenyl |

(continued)

| Indenyl ring's R2, R5, R9 and R12 substituents | |
|---|---|
| δ-31 | Phenanthryl |
| δ-32 | 4-iso-Propylphenyl |
| δ-33 | 4-tert-Butylphenyl |
| δ-34 | 4-Thexylphenyl |
| δ-35 | 4-tert-Octylphenyl |
| δ-36 | 3,5-Di-tert-butylphenyl |
| δ-37 | 4-(1-Adamantyl)phenyl |
| δ-38 | 4-Trimethylsilylphenyl |
| δ-39 | 3,5-Bis(trimethylsilyl)phenyl |
| δ-40 | 3,5-Di-tert-butyl-4-methoxyphenyl |
| δ-41 | 3,5-Di-iso-propyl-4-dimethylaminophenyl |
| δ-42 | Julolidinyl |
| δ-43 | Tetramethyljulolidinyl |
| δ-44 | 2-Furyl |
| δ-45 | 5-Methyl-2-furyl |
| δ-46 | 2-Benzofuryl |
| δ-47 | 2-Thienyl |
| δ-48 | 5-Methyl-2-thienyl |
| δ-49 | 2-Benzothienyl |
| δ-50 | N-Pyrrolidinyl |
| δ-51 | N-Pyrrolyl |
| δ-52 | N-Indolyl |
| δ-53 | N-Carbazolyl |
| δ-54 | 3,6-Di-tert-butyl-carbazolyl |
| | |
| | |
| | |
| | |

The $R^2$, $R^5$, $R^9$ and $R^{12}$ substituents in [Table 4] above may be the same or different from each other in their combinations.

[Table 5]

| Indenyl ring's R3, R4, R10 and R11 substituents | |
|---|---|
| ε-1 | Hydrogen |
| ε-2 | Methyl |
| ε-3 | Methoxy |
| ε-4 | Ethyl |

(continued)

| Indenyl ring's R3, R4, R10 and R11 substituents | |
|---|---|
| ε-5 | Ethoxy |
| ε-6 | n-Propyl |
| ε-7 | iso-Propyl |
| ε-8 | iso-Propoxy |
| ε-9 | n-Butyl |
| ε-10 | iso-Butyl |
| ε-11 | see-Butyl |
| ε-12 | tert-Butyl |
| ε-13 | Neopentyl |
| ε-14 | Cyclopentyl |
| ε-15 | Cyclohexyl |
| ε-16 | Thexyl |
| ε-17 | tert-Octyl |
| ε-18 | Phenoxy |

The $R^3$, $R^4$, $R^{10}$ and $R^{11}$ substituents in [Table 5] above may be the same or different from each other in their combinations.

[Table 6]

| 1-Indenyl ring's R7 substituent | |
|---|---|
| ζ-1 | Hydrogen |
| ζ-2 | Methyl |
| ζ-3 | Ethyl |
| ζ-4 | n-Propyl |
| ζ-5 | iso-Propyl |
| ζ-6 | Allyl |
| ζ-7 | Crotyl |
| ζ-8 | Methallyl |
| ζ-9 | n-Butyl |
| ζ-10 | iso-Butyl |
| ζ-11 | But-3-en-1-yl |
| ζ-12 | Neopentyl |
| ζ-13 | Cyclohexylmethyl |
| ζ-14 | 1-Adamantylmethyl |
| ζ-15 | Benzyl |
| ζ-16 | Trimethylsilylmethyl |
| ζ-17 | Phenyl |
| ζ-18 | Tolyl |

(continued)

| 1-Indenyl ring's R7 substituent | |
|---|---|
| ζ-19 | Naphthyl |
| ζ-20 | Anisyl |
| ζ-21 | 4-tert-Butylphenyl |
| ζ-22 | 4-Trimethylsilylphenyl |
| ζ-23 | 3,5-Di-tert-butylphenyl |
| ζ-24 | 3,5-Bis(trimethylsilyl)phenyl |
| ζ-25 | 3,5-Di-tert-butyl-4-methoxyphenyl |
| ζ-26 | 3,5-Di-iso-propyl-4-dimethylaminophenyl |
| ζ-27 | Julolidinyl |
| ζ-28 | Tetramethyljulolidinyl |
| ζ-29 | 2-Furyl |
| ζ-30 | 5-Methyl-2-furyl |
| ζ-31 | 2-Thienyl |
| ζ-32 | 5-Methyl-2-thienyl |
| ζ-33 | N-Pyrrolidinyl |
| ζ-34 | N-Piperidinyl |
| ζ-35 | N-Morpholinyl |
| ζ-36 | N-Methyl-piperazinyl |
| ζ-37 | N-Pyrrolyl |
| ζ-38 | N-Indolyl |
| ζ-39 | N-Carbazolyl |

[Table 7]

| Crosslinking moiety | |
|---|---|
| η-1 | Methylene |
| η-2 | 1,1-Ethylene |
| η-3 | Benzyl (Phenylmethylene) |
| η-4 | Dimethylmethylene (Isopropylidene) |
| η-5 | Methylethylmethylene (sec-Butylidene) |
| η-6 | Diethylmethylene (3-Pentylidene) |
| η-7 | Di-n-propylmethylene (4-Heptylidene) |
| η-8 | Di-n-butylmethylene (5-Nonylidene) |
| η-9 | Dibenzylmethylene |
| η-10 | (Methyl)(phenyl)methylene (1-Phenethylidene) |
| η-11 | (Methyl)(4-methylphenyl)methylene |
| η-12 | (Methyl)(4-methoxyphenyl)methylene |
| η-13 | Diphenylmethylene |

(continued)

| Crosslinking moiety | |
|---|---|
| η-14 | Di(4-methylphenyl)methylene |
| η-15 | Di(4-methoxyphenyl)methylene |
| η-16 | Di(4-dimethylaminophenyl)methylene |
| η-17 | 1,1-Cyclobutylene |
| η-18 | 1,1-Cyclopentylene |
| η-19 | 1,1-Cyclohexylene |
| η-20 | Dimethylsilylene |
| η-21 | Diethylsilylene |
| η-22 | Divinylsilylene |
| η-23 | Di-n-propylsilylene |
| η-24 | Di-iso-propylsilylene |
| η-25 | Diallylsilylene |
| η-26 | Di-n-butylsilylene |
| η-27 | Di-tert-butylsilylene |
| η-28 | Di-n-hexylsilylene |
| η-29 | Diphenylsilylene |
| η-30 | Di(4-methylphenyl)silylene |
| η-31 | 1,1-Silacyclobutylene (Trimethylenesilylene) |
| η-32 | 1,1-Silacyclopentylene (Tetramethylenesilylene) |
| η-33 | 1,1-Silacyclohexylene (Pentamethylenesilylene) |
| η-34 | (Methyl)(ethyl)silylene |
| η-35 | (Methyl)(vinyl)silylene |
| η-36 | (Methyl)(allyl)silylene |
| η-37 | (Methyl)(n-hexyl)silylene |
| η-38 | (Methyl)(n-octyl)silylene |
| η-39 | (Methyl)(n-decyl)silylene |
| η-40 | (Methyl)(cyclohexyl)silylene |
| η-41 | (Methyl)(phenyl)silylene |

Specific examples of the metal moiety MXn include

$ZrF_2$, $ZrCl_2$, $ZrBr_2$, $ZrI_2$, $Zr(Me)_2$, $Zr(Bn)_2$, $Zr(Allyl)_2$, $Zr(CH_2\text{-}tBu)_2$, Zr(1,3-butadienyl), Zr(1,3-pentadienyl), Zr(2,4-hexadienyl), Zr(1,4-diphenyl-1,3-pentadienyl), $Zr(CH_2\text{-}Si(Me)_3)_2$, $Zr(OMe)_2$, $Zr(OiPr)_2$, $Zr(NMe_2)_2$, $Zr(OMs)_2$, $Zr(OTs)_2$, $Zr(OTf)_2$,
$HfF_2$, $HfCl_2$, $HfBr_2$, $HfI_2$, $Hf(Me)_2$, $Hf(Bn)_2$, $Hf(Allyl)_2$, $Hf(CH_2\text{-}tBu)_2$, Hf(1,3-butadienyl), Hf(1,3-pentadienyl), Hf(2,4-hexadienyl), Hf(1,4-diphenyl-1,3-pentadienyl), $Hf(CH_2\text{-}Si(Me)_3)_2$, $Hf(OMe)_2$, $Hf(OiPr)_2$, $Hf(NMe_2)_2$, $Hf(OMs)_2$, $Hf(OTs)_2$, and $Hf(OTf)_2$.

Me is a methyl group, Bn is a benzyl group, tBu is a tert-butyl group, $Si(Me)_3$ is a trimethylsilyl group, OMe is a methoxy group, OiPr is an iso-propoxy group, $NMe_2$ is a dimethylamino group, OMs is a methanesulfonate group, OTs is a p-toluenesulfonate group, and OTf is a trifluoromethanesulfonate group.
According to the above notation, a compound represented by the following formula [6] is exemplified when the

2-indenyl ring moiety is α-1 in [Table 1], the 1-indenyl ring moiety is β-5 in [Table 2], all the indenyl ring moiety's $R^1$, $R^6$ and $R^8$ substituents are γ-1 in [Table 3], all the 2-indenyl ring moiety's $R^2$ and $R^5$ substituents are δ-1 in [Table 4], all the 2-indenyl ring moiety's $R^3$ and $R^4$ substituents are ε-1 in [Table 5], the 1-indenyl ring moiety's $R^7$ substituent is ζ-30 in [Table 6], the 1-indenyl ring moiety's $R^9$ substituent is δ-38 in [Table 4], the 1-indenyl ring moiety's $R^{12}$ substituent is δ-3 in [Table 4], and the crosslinking moiety is η-20 in [Table 7] in combination, and the metal moiety MXn is $ZrCl_2$.

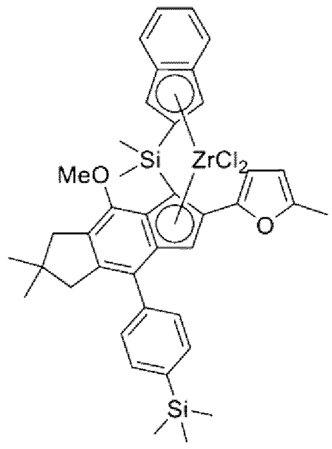

・・・[6]

A compound represented by the following formula [7] is exemplified when the 2-indenyl ring moiety is α-1 in [Table 1], the 1-indenyl ring moiety is β-2 in [Table 2], all the indenyl ring moiety's $R^1$, $R^6$ and $R^8$ substituents are γ-1 in [Table 3], all the 2-indenyl ring moiety's $R^2$ and $R^5$ substituents are δ-2 in [Table 4], all the 2-indenyl ring moiety's $R^3$ and $R^4$ substituents are ε-1 in [Table 5], the 1-indenyl ring moiety's $R^7$ substituent is ζ-1 in [Table 6], and the crosslinking moiety is η-4 in [Table 7] in combination, and the metal moiety MXn is $Zr(NMe_2)_2$.

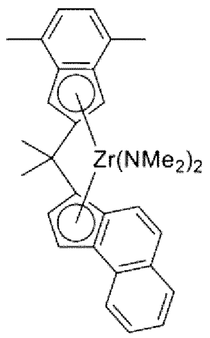

・・・[7]

A compound represented by the following formula [8] is exemplified when the 2-indenyl ring moiety is α-3 in [Table 1], the 1-indenyl ring moiety is β-1 in [Table 2], all the 2-indenyl ring moiety's $R^1$ and $R^6$ substituents are γ-2 in [Table 3], all the indenyl ring moiety's $R^2$, $R^5$ and $R^{12}$ substituents are δ-1 in [Table 4], the 1-indenyl ring moiety's $R^7$ substituent is ζ-12 in [Table 6], the 1-indenyl ring moiety's $R^8$ substituent is γ-1 in [Table 3], the 1-indenyl ring moiety's $R^9$ substituent is δ-42 in [Table 4], the 1-indenyl ring moiety's $R^{10}$ substituent is ε-3 in [Table 5], the 1-indenyl ring moiety's $R^{11}$ substituent is ε-12 in [Table 5], and the crosslinking moiety is η-31 in [Table 7] in combination, and the metal moiety MXn is $HfMe_2$ represents the compound of formula [8] below.

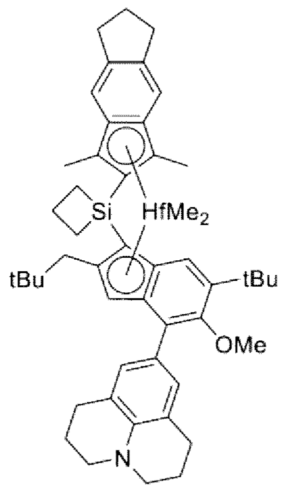

・・・[8]

A compound represented by the following formula [9] is exemplified when the 2-indenyl ring moiety is α-1 in [Table 1], the 1-indenyl ring moiety is β-1 in [Table 2], all the 2-indenyl ring moiety's $R^1$ and $R^6$ substituents are γ-1 in [Table 3], the 2-indenyl ring moiety's $R^2$ substituent is δ-7 in [Table 4], all the 2-indenyl ring moiety's $R^3$, $R^4$, $R^{10}$ and $R^{11}$ substituents are ε-1 in [Table 5], the 2-indenyl ring moiety's $R^5$ substituent is δ-2 in [Table 4], the 1-indenyl ring moiety's $R^7$ substituent is ζ-1 in [Table 6], the 1-indenyl ring moiety's $R^8$ substituent is γ-9 in [Table 3], all the 1-indenyl ring moiety's $R^9$ and $R^{12}$ substituents are δ-1 in [Table 4] and the crosslinking moiety is η-29 in [Table 7] in combination, and the metal moiety MXn is Zr(1,3-pentadienyl).

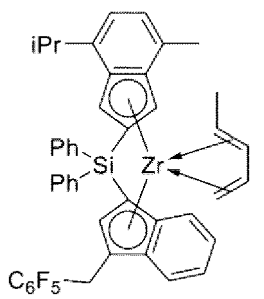

・・・[9]

The transition metal compound (1) can be produced by conventionally known methods, and the production method thereof is not particularly limited.

The substituted indene compound, which is the starting material, can be produced by the known methods, and the production method thereof is not particularly limited. Examples of the known production methods include production methods disclosed in "Organometallics 1994, 13, 954.", "Organometallics 2006, 25, 1217.", patent literature JP2006-509059A, "Bioorg. Med. Chem. 2008, 16, 7399.", patent literature WO2009/080216, "Organometallics 2011, 30, 5744.", patent literature JP2011-500800A, "Organometallics 2012, 31, 4962.", "Chem. Eur. J. 2012, 18, 4174.", patent literature JP2012-012307A, JP2012-121882A, JP2014-196319A, JP2014-513735A, JP2015-063495A, JP2016-501952A, and JP2019-059933A, for example.

Examples of the known production method of transition metal compounds (1) and precursor compounds (ligands) include "Macromolecules 2001, 34, 2072.", "Macromolecules 2003, 36, 9325.", "Organometallics 2004, 23, 5332.", "Eur. J. Inorg. Chem. 2005, 1003.", and "Eur. J. Inorg. Chem. 2009, 1759.".

In the transition metal compound (1), planes of the indenyl ring moieties, which interpose the crosslinking moiety therebetween and connect to the center metal, are present in two directions (a front plane and a back plane). Therefore, when no plane of symmetry is present in the 2-indenyl ring moiety, two structural isomers represented by the following general formula [10a] or [10b] are present by way of an example.

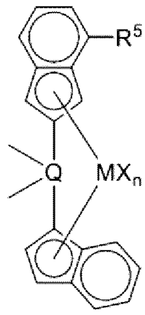 · · · [10a] 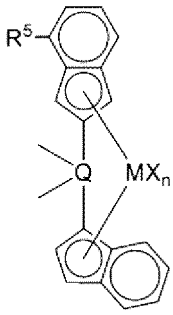 · · · [10b]

Likewise, also when the substituents $R^{13}$ and $R^{14}$ of the crosslinking moiety are not the same, two structural isomers represented by the following general formula [11a] or [11b] are present by way of an example.

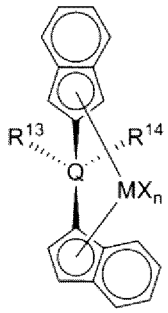 · · · [11a] 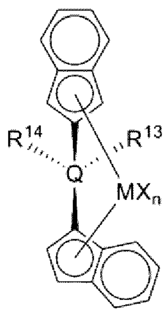 · · · [11b]

Purification and fractionation of these structural isomer mixtures or selective production of the structural isomers are enabled by known methods, and the production method therefore is not particularly limited. Examples of the known production methods include, in addition to those listed as the production methods of the transition metal compound (1) above, the production methods disclosed in patent literature JPH10-109996A, "Organometallics 1999, 18, 5347.", "Organometallics 2012, 31, 4340.", and patent literature JP2011-502192A.

Within the scope of the transition metal compound (1) described above, one transition metal compound may be used singly, two or more transition metal compounds may be used in combination, a structural isomeric mixture may be used, one structural isomer may be used singly, and two or more structural isomeric mixtures may be used. As described above, according to the present invention, an ethylene polymer in which a large number of long chain branches are introduced can be produced with high catalytic activity using only the transition metal compound (1) as a transition metal compound that constitutes a catalyst for olefin polymerization. However, to the extent that this effect is not impaired, one or more other transition metal compounds may be used in combination with the transition metal compound (1) as the transition metal compound. In this case, the transition metal compound (1) may be any of the embodiments described above.

<Solid support (S)>

The solid support (S) contained in the catalyst for olefin polymerization (X) is an inorganic compound or an organic compound, and is a granular or fine particulate solid.

Examples of the inorganic compound used as the solid support (S) include a porous oxide, a solid aluminoxane compound, an inorganic chloride, a clay, a clay mineral, or an ion-exchangeable layered compound.

The porous oxide here used can be, for example, $SiO_2$, $Al_2O_3$, MgO, ZrO, $TiO_2$, $B_2O_3$, CaO, ZnO, BaO or $ThO_2$, or a composite or a mixture including such an oxide, specifically, natural or synthetic zeolite, $SiO_2$-MgO, $SiO_2$-$Al_2O_3$, $SiO_2$-$TiO_2$, $SiO_2$-$V_2O_5$, $SiO_2$-$Cr_2O_3$ or $SiO_2$-$TiO_2$-MgO, for example. Of these, one mainly containing $SiO_2$ is preferable.

The porous oxide may contain a small amount of a carbonate, a sulfate, a nitrate, or an oxide component, such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$, or $Li_2O$.

Such porous oxide differs in properties depending on the type and the production method, and the solid support (S) preferably has a particle size in a range from usually 0.2 to 300 um, preferably 1 to 200 μm, a specific surface area in a range from usually 50 to 1200 $m^2/g$, preferably 100 to 1000 $m^2/g$, and a pore volume in a range from usually 0.3 to 30 $cm^3/g$. Such a support is, if necessary, calcined at, for example, 100 to 1000°C, preferably 150 to 700°C, and then used.

The solid aluminoxane compound includes, for example, an aluminoxane of a structure represented by the

following general formula (S-a), an aluminoxane of a structure represented by the following general formula (S-b), and an aluminoxane having a structure of a repeating unit represented by the following general formula (S-c) and a repeating unit represented by the following general formula (S-d) .

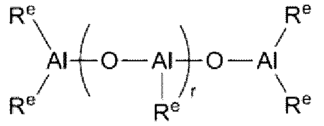
・・・ (S－a)

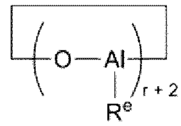
・・・ (S－b)

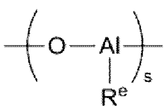
・・・ (S－c)

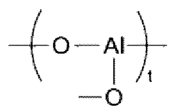
・・・ (S－d)

In the above formulas (S-a) to (S-d), each $R^e$ is independently a hydrocarbon group having 1 to 10 carbon atoms, preferably 1 to 4 carbon atoms. Specific examples thereof include hydrocarbon groups such as a methyl group, an ethyl group, a propyl group, an isopropyl group, an isopropenyl group, an n-butyl group, a sec-butyl group, a tert-butyl group, a pentyl group, a hexyl group, an octyl group, a decyl group, a dodecyl group, a tridecyl group, a tetradecyl group, a hexadecyl group, an octadecyl group, an eicosyl group, a cyclohexyl group, a cyclooctyl group, a phenyl group, a tolyl group, and an ethylphenyl group. A methyl group, an ethyl group, and an isobutyl group are preferred, and a methyl group is particularly preferred. Alternatively, a portion of $R^e$ may be substituted with a halogen atom such as chlorine or bromine, and the halogen content may be 40 wt% or less based on $R^e$. The straight lines in the above formulas (S-c) and (S-d), where one end is not connected to the atom, indicate the bonding with another atom not shown.

In the formulas (S-a) and (S-b), r represents an integer of 2 to 500, preferably 6 to 300, especially preferably 10 to 100. In the formulas (S-c) and (S-d), s and t each represent an integer of 1 or more. r, s, and t are selected so that the aluminoxane can remain substantially in a solid state under the reaction environment used.

The solid aluminoxane compound differs from the conventionally known support for olefin polymerization catalysts in that it does not contain an inorganic solid component such as silica or alumina and an organic polymer component such as polyethylene or polystyrene, and is solidified with an alkyl aluminum compound as the main component. The term "solid" means that the aluminoxane component substantially maintains a solid state in a reaction environment where the aluminoxane is used. More specifically, the aluminoxane component substantially maintains a solid state when preparing a catalyst for olefin polymerization (e.g., a catalyst for ethylene polymerization) by contacting the component (A) with an aluminoxane component as described below, and when performing polymerization (e.g., suspension polymerization) of olefin (e.g., ethylene) using the prepared catalyst for olefin polymerization.

Whether or not the aluminoxane component is in a solid state is most conveniently confirmed visually, but it is often difficult to visually confirm, for example, during polymerization. In such a case, it is possible to determine, for example, from the properties of the polymer powder obtained after polymerization and the attachment to the reactor. When the properties of the polymer powder are good and there is less adhesion to the reactor, even if a part of the aluminoxane component is eluted somewhat under the polymerization environment, it is not departed from the spirit of the present invention. Examples of the indicator for determining the properties of the polymer powder include a bulk density, a particle shape, a surface shape, and a degree of presence of amorphous polymer, and among them, the bulk density of the polymer is preferred from the viewpoint of quantitative properties. The bulk density is usually in the range of 0.01 to 0.9, preferably in the range of 0.05 to 0.6, more preferably in the range of 0.1 to 0.5.

The dissolution ratio of the solid aluminoxane compound to n-hexane held at a temperature of 25°C is typically in the range of 0 to 40 mol%, preferably 0 to 20 mol%, and particularly preferably 0 to 10 mol%.

The dissolution ratio is determined by adding 2 g of the solid aluminoxane compound support to 50 ml of n-hexane held at 25°C, and stirring the mixture for 2 hours, then separating the solution part using a G-4 glass filter and measuring the aluminum concentration of this filtrate. Accordingly, the dissolution ratio is determined as the proportion of the amount of aluminum atoms present in the filtrate relative to the amount of aluminum atoms corresponding to 2 g of the aluminoxane used.

Any known solid aluminoxane can be used as the solid aluminoxane compound, for example, a solid polyaluminoxane composition described in patent literature WO2014/123212 can be used. Examples of the known production method include the production methods described in patent literature JPH07-42301B, JPH06-220126A, JPH06-220128A, JPH11-140113A, JPH11-310607A, JP2000-38410A, JP2000-95810A, and WO2010/55652.

The average particle size of the solid aluminoxane compound is generally in the range of 0.01 to 50000 μm, preferably 0.1 to 1000 um, and particularly preferably 1 to 200 um. The average particle size of the solid aluminoxane compound is determined by observing the particles with a scanning electron microscope, measuring the particle size of

100 or more particles, and averaging the sizes by weight. First, the particle size d of each particle is measured by measuring the length of the particle image in two parallel lines in the horizontal direction and the vertical direction, respectively, and is determined by the following formula.

$$\text{Particle size d} = ((\text{length in the horizontal direction})^2 + (\text{length in the vertical direction})^2)^{0.5}$$

The weight-average particle size of the solid aluminoxane compound is then determined by the following formula using the particle size d determined above and the number of particles n.

$$\text{Average particle size} = \sum nd^4/\sum nd^3$$

It is preferred that the solid aluminoxane compound has a specific surface area of 50 to 1000 $m^2/g$, preferably 100 to 800 $m^2/g$, and a pore volume of 0.1 to 2.5 $cm^3/g$.

Examples of the inorganic halide include $MgCl_2$, $MgBr_2$, $MnCl_2$ and $MnBr_2$. The inorganic halide may be used as it is, or may be used after being crushed with a ball mill or a vibrating mill. Further, the inorganic halide may be used after being dissolved in solvents such as alcohols and precipitated as fine particles with a precipitating agent.

The clay usually includes a clay mineral as a main component. The ion-exchangeable layered compound is a compound having a crystal structure in which planes formed by, for example, ionic bonds are mutually stacked in parallel by a weak bond strength, and in which ions contained therein are exchangeable. Most clay mineral is the ion-exchangeable layered compounds. Such a clay, a clay mineral, and an ion-exchangeable layered compound here used are not limited to natural products, and can also be artificially synthesized products.

Examples of the clay, the clay mineral, or the ion-exchangeable layered compound can include a clay, a clay mineral, and an ionic crystalline compound which has a layered crystal structure, such as a hexagonal closest packing type, an antimony type, a $CdCl_2$ type, and a $CdI_2$ type.

Examples of such a clay and a clay mineral include kaolin, bentonite, kibushi clay, gairome clay, allophane, hisingerite, pyrophyllite, micas, montmorillonites, vermiculite, chlorite rocks, palygorskite, kaolinite, nacrite, dickite and halloysite. Examples of the ion-exchangeable layered compound include crystalline acidic salts of a polyvalent metal, such as $\alpha$-$Zr(HAsO_4)_2{\cdot}H_2O$, $\alpha$-$Zr(HPO_4)_2$, $\alpha$-$Zr(KPO_4)_2{\cdot}3H_2O$, $\alpha$-$Ti(HPO_4)_2$, $\alpha$-$Ti(HAsO_4)_2{\cdot}H_2O$, $\alpha$-$Sn(HPO_4)_2{\cdot}H_2O$, $\gamma$-$Zr(HPO_4)_2$, $\gamma$-$Ti(HPO_4)2$ and $\gamma$-$Ti(NH_4PO_4)_2{\cdot}H_2O$.

Such a clay, a clay mineral, and an ion-exchangeable layered compound are preferably those with a pore volume of 0.1 cc/g or more, and particularly preferably 0.3 to 5 cc/g measured by mercury intrusion method for pores having a radius of 20 Å or more. The pore volume is measured for pores having a pore radius in the range of 20 to $3 \times 10^4$ Å by mercury intrusion method with a mercury porosimeter. When those with a pore volume of less than 0.1 cc/g for pores having a radius of 20 Å or more are used as a support, high polymerization activity tends to be less likely to be obtained.

It is also preferred to subject the clay and the clay mineral to a chemical treatment. As the chemical treatment, any treatment such as a surface treatment for removal of impurities attached to a surface, and a treatment having an effect on the crystal structure of the clay can be used. Specific examples of the chemical treatment include an acid treatment, an alkali treatment, a salt treatment, and an organic substance treatment. The acid treatment removes surface impurities, and increases the surface area by eluting cations such as Al, Fe, and Mg in the crystal structure. The alkali treatment destroys the crystal structure of the clay, resulting in a change in the structure of the clay. The salt treatment and organic substance treatment can change the surface area or interlayer distance by forming, for example, an ionic complex, a molecular complex, an organic derivative.

The ion-exchangeable layered compound may be a layered compound where a space between layers is enlarged by exchanging an exchangeable ion in the space between layers with another large and bulky ion by means of ion exchangeability. Such a bulky ion serves as a shore supporting a layered structure, and is usually referred to as pillar. Such introduction of another substance into the space between layers in the layered compound is referred to as intercalation. Examples of a guest compound that is to be intercalated include cationic inorganic compounds such as $TiCl_4$ and $ZrCl_4$, metal alkoxides such as $Ti(OR)_4$, $Zr(OR)_4$, $PO(OR)_3$ and $B(OR)_3$, wherein R represents, for example, a hydrocarbon group, and metal hydroxide ions such as $[Al_{13}O_4(OH)_{24}]^{7+}$, $[Zr_4(OH)_{14}]^{2+}$ and $[Fe_3O(OCOCH_3)_6]^+$. Such compounds may be used singly or in combination of two or more kinds thereof. During intercalation of such a compound, a polymerized product obtained by hydrolysis of a metal alkoxide such as $Si(OR)_4$, $Al(OR)_3$ or $Ge(OR)_4$, wherein R represents, for example, a hydrocarbon group, a colloidal inorganic compound such as $SiO_2$, or the like can also coexist. Examples of the pillar include an oxide generated by intercalating the metal hydroxide ion into the space between layers,

and then subjecting to heating and dehydration.

The clay, the clay mineral, and the ion-exchangeable layered compound may be used as it is, or may be used after subjected to a processing such as ball milling or sieving. They may be used after adsorbing newly added water, or after being heated and dehydrated. In addition, they may be used singly, or in combination of two or more.

Examples of the organic compound used as the solid support (S) include a granular or fine particulate solid having a particle size in a range from 10 to 300 um. Specific examples of the organic compound include granular or fine particulate solids including a polymer produced using an olefin having 2 to 14 carbon atoms such as ethylene, propylene, 1-butene or 4-methyl-1-pentene as the main component, a polymer or reactant produced using vinylcyclohexane, styrene, or divinylbenzene as a main component, or a modified product thereof.

As the solid support (S), the porous oxide is preferred in view of preventing foreign substances during forming.

<Component (C)>

The catalyst for olefin polymerization (X) may preferably further contain a component (C). The component (C) is at least one compound selected from the group consisting of an organometallic compound (c-1) represented by the following general formulas (3) to (5), an organoaluminum oxy compound (c-2), and a compound (c-3) that reacts with the component (A) to form an ion pair.

$$R^a_mAl(OR^b)_nH_pX_q \qquad (3)$$

In the formula (3), $R^a$ and $R^b$ each independently represent a hydrocarbon group having 1 to 15 carbon atoms, X represents a halogen atom, m is a number of $0 < m \leq 3$, n is a number of $0 \leq n < 3$, p is a number of $0 \leq p < 3$, q is a number of $0 \leq q < 3$, and $m + n + p + q = 3$ is satisfied.

$$M^aAlR^a_4 \qquad (4)$$

In the formula (4), $M^a$ represents Li, Na or K, and $R^a$ represents a hydrocarbon group having 1 or more and 15 or less carbon atoms.

$$R^a_rM^bR^b_sX_t \qquad (5)$$

In the formula (5), $R^a$ and $R^b$ each independently represent a hydrocarbon group having 1 or more and 15 or less carbon atoms, $M^b$ is selected from Mg, Zn, and Cd, X represents a halogen atom, r is a number of $0 < r \leq 2$, s is a number of $0 \leq s \leq 1$, t is a number of $0 \leq t \leq 1$, and $r + s + t = 2$ is satisfied.

Among the organometallic compounds (c-1), those indicated by the formula (3) are preferred, and specific examples thereof include trialkylaluminum such as trimethylaluminum, triethylaluminum, triisopropylaluminum, triisobutylaluminum, trihexylaluminum, trioctylaluminum, and tri-2-ethylhexylaluminum;

dialkylaluminum halides such as dimethylaluminum chloride, diethylaluminum chloride, diisopropylaluminum chloride, diisobutylaluminum chloride, and dimethylaluminum bromide;
alkylaluminum sesquihalides such as methylaluminum sesquichloride, ethylaluminum sesquichloride, isopropylaluminum sesquichloride, butylaluminum sesquichloride, and ethylaluminum sesquibromide;
alkylaluminum dihalides such as methylaluminum dichloride, ethylaluminum dichloride, isopropylaluminum dichloride, and ethylaluminum dibromide;
alkylaluminum hydrides such as dimethylaluminum hydride, diethylaluminum hydride, dihydrophenylaluminum hydride, diisopropylaluminum hydride, di-n-butylaluminum hydride, diisobutylaluminum hydride, diisohexylaluminum hydride, diphenylaluminum hydride, dicyclohexylaluminum hydride, di-sec-heptylaluminum hydride, and di-sec-nonyl aluminum hydride; and
dialkylaluminum alkoxide such as dimethylaluminum ethoxide, diethylaluminum ethoxide, diisopropylaluminum methoxide, and diisobutylaluminum ethoxide.

Examples of the formula (4) include aluminum hydride lithium and examples of the formula (5) include dialkyl zinc compounds described in patent literature JP2003-171412A, for example, and these may be used in combination with a phenolic compound, for example.

The organoaluminum oxy compound (c-2) is preferably an organoaluminum oxy compound prepared from trialkyl aluminum or tricycloalkyl aluminum, and particularly preferably an aluminoxane prepared from trimethyl aluminum or triisobutyl aluminum, such as methylaluminoxane. Such an organoaluminum oxy compound is used singly or in combination of two or more.

As the compound (c-3) that reacts with the component (A) to form an ion pair, a Lewis acid, an ionic compound, a borane compound, and a carborane compound described in, for example, patent literature JPH01-501950A, JPH01-502036A, JPH03-179005A, JP H03-179006A, JPH03-207703A, JP H03-207704A, US5321106B, and further include a heteropoly compounds and an isopoly compounds can be used.
When the organoaluminum oxy compound such as methylaluminoxane is used as a co-catalyst component in combination, not only the catalyst for olefin polymerization (X) exhibits very high polymerization activity on olefin compounds, but also a solid support component containing the co-catalyst component can be easily prepared by reaction with an active hydrogen in the solid support. Thus, the component (C) preferably contains at least the organoaluminum oxy compound (c-2).

<Usage and addition order of each component>

The catalyst for olefin polymerization (X) can be prepared by mixing and contacting the component (A) and the component (S), and optionally the component (C), in an inert hydrocarbon.
Examples of the method of contacting each component include, focusing on the contact order,

(i) a method of bringing the component (A) into contact the component (S),
(ii) a method of bringing the component (C) into contact with the component (S), and then bringing the component (A) into contact therewith,
(iii) a method of bringing the component (C) into contact with the component (A) and then bringing the component (S) into contact therewith,
(iv) a method of bringing the component (C) into contact with the component (S) and then bringing a mixture of a component (A) and a component (C) into contact therewith, and
(v) a method of bringing the component (C) into contact with the component (S), further bringing the component (C) into contact therewith, and then bringing a mixture of the component (A) and the component (C) into contact therewith. When plural kinds of components (C) are used, the components (C) each other may be the same or different. Among the above methods, (i), (ii) and (iii) are preferred.

In each method above showing a form of the order of contact, fouling during the polymerization reaction is reduced or particle properties of the produced polymer are improved by allowing a component (G) to co-exist in the step including the contact between the component (S) and the component (C) and the step including the contact between the component (S) and the component (A). As the component (G), a compound having a polar functional group can be used, and the component (G) is preferably a non-ionic surfactant, and more preferably a polyalkylene oxide block, a higher aliphatic amide, a polyalkylene oxide, a polyalkylene oxide alkyl ether, an alkyl diethanolamine, a polyoxyalkylene alkylamine, a glycerin fatty acid ester, and an N-acylamino acid. These may be used singly or in combination of two or more.
Examples of a solvent used in the preparation of the catalyst for olefin polymerization (X) include an inert hydrocarbon solvent, and specific examples thereof include aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; halogenated hydrocarbons such as ethylene chloride, chlorobenzene, and dichloromethane; and a mixture thereof.
In the contact between the component (C) and the component (S), they are chemically bonded by the reaction between a reaction site in the component (C) and a reaction site in the component (S) to form a contact product of the component (C) and the component (S). The time for the contact between the component (C) and the component (S) is generally 1 minute to 20 hours, preferably 30 minutes to 10 hours, and the temperature at which the contact is made is usually -50 to 200°C, preferably -20 to 120°C. When the initial contact between the component (C) and the component (S) is made rapidly, the component (S) collapses due to its reaction exotherm or reaction energy, the morphology of the resulting solid catalyst component deteriorates, and using this for polymerization often makes continuous operation difficult due to poor polymer morphology. Thus, in the initial stage of the contact between the component (C) and the component (S), it is preferred that the contact be made at a lower temperature to reduce the reaction exotherm, or that the reaction exotherm be controlled and the reaction be conducted at a rate capable of maintaining the initial contact temperature. The same applies to the case where the contact between the component (S) and the component (C) is made, and the component (C) is brought into contact therewith. The contact weight ratio of the component (C) and the component (S) (weight of component (C)/weight of component (S)) can be selected arbitrarily, but a higher contact weight ratio enables more of the component (A) to be brought into contact and enables the catalyst activity per weight of the solid catalyst component to increase.
The contact weight ratio of the component (C) to the component (S) [= weight of component (C)/weight of component (S)] is preferably 0.05 to 3.0, and particularly preferably 0.1 to 2.0.
When the component (A) and the contact product of the component (C) and the component (S) are brought

into contact with each other, the contact time is usually 1 minute to 20 hours, preferably 1 minute to 10 hours, and the contact temperature is usually in the range of -50 to 200°C, preferably -50 to 100°C.

The component (C-1) is used in an amount such that the molar ratio [(C-1)/M] of the component (C-1) to all the transition metal atoms (M) in the component (A) is usually 0.01 to 100,000, preferably 0.05 to 50,000.

The component (C-2) is used in an amount such that the molar ratio [(C-2)/M] of the component (C-2) (in terms of aluminum atom) to all the transition metal atoms (M) in the component (A) is usually 10 to 500,000, preferably 20 to 100,000.

The component (C-3) is used in an amount such that the molar ratio [(C-3)/M] of the component (C-3) to all the transition metal atoms (M) in the component (A) is usually 1 to 10, preferably 1 to 5.

The ratio of the component (C) to all the transition metal atoms (M) in the component (A) can be determined by inductively coupled plasma analysis (ICP analysis). For ethylene polymerization, the catalyst for olefin polymerization (X) can be used as it is, and this catalyst for olefin polymerization may be used after prepolymerizing thereonto an olefin to form a prepolymerized catalyst (XP).

The prepolymerized catalyst (XP) can be prepared by prepolymerizing ethylene, for example, in the presence of the catalyst for olefin polymerization (X), usually in an inert hydrocarbon solvent. The preparation can be performed by any method of batchwise, semi-continuous, or continuous, and can also be performed under reduced pressure, normal pressure, or pressurization. Further, desirably, the prepolymerized catalyst (XP) is produced in an amount of 0.01 to 1000 g, preferably 0.1 to 800 g, more preferably 0.2 to 500 g per 1 g of the solid catalyst component, by prepolymerization.

The prepolymerized catalyst (XP) generated in the inert hydrocarbon solvent may be separated from the suspension and then suspended again in an inert hydrocarbon, and ethylene may be introduced into the thus obtained suspension. Alternatively the prepolymerized catalyst (XP) generated in the inert hydrocarbon solvent may be dried, and then ethylene may be introduced.

The pre-polymerization temperature is -20 to 80°C, preferably 0 to 60°C, and the pre-polymerization time is 0.5 to 100 hours, preferably about 1 to 50 hours. An olefin preferably including ethylene as the main component is used for the prepolymerization.

As the form of the solid catalyst component used for the prepolymerization, those already mentioned can be utilized without limitation. The component (C) is used as needed, and the organometallic compound (c-1) represented by the formula (3) is preferably used. When the component (C) is used, the component (C) is used in an amount such that the molar ratio (Al/M) of the aluminum atom (Al) in the component (C) to the transition metal atom (M) in the component (A) is 0.1 to 10000, preferably 0.5 to 5000.

It is preferred that the concentration of the catalyst for olefin polymerization (X) in the pre-polymerization system be usually 1 to 1000 grams/liter, and even 10 to 500 grams/liter as the ratio of the catalyst for olefin polymerization/polymerization volume. At the time of pre-polymerization, the above-mentioned component (G) may be allowed to coexist to reduce fouling or improve particle properties.

The component (G) may be brought into contact with the prepolymerized catalyst (XP) once generated by the prepolymerization to improve the fluidity of the prepolymerized catalyst (XP) and to reduce the occurrence of a heat spot, a sheeting or a polymer lump during polymerization.

The temperature when bringing the component (G) into contact is usually -50 to 50°C, preferably -20 to 50°C, and the contact time is usually 1 minute to 20 hours, preferably 5 minutes to 10 hours.

In bringing the catalyst for olefin polymerization (X) and the component (G) with each other, the component (G) is used in an amount of 0.1 to 20 parts by weight, preferably 0.3 to 10 parts by weight, more preferably 0.4 to 5 parts by weight, relative to 100 parts by weight of the catalyst for olefin polymerization (X).

Mixing and contacting of the catalyst for olefin polymerization (X) and the component (G) can be made in an inert hydrocarbon solvent, and examples of the inert hydrocarbon solvent include those similar to the inert hydrocarbon solvent described above.

In the production method of the ethylene polymer according to the present invention, a prepolymerized catalyst (XP) after dried (hereinafter also referred to as a "dried prepolymerized catalyst") can be used as the catalyst for olefin polymerization (X). The drying of the prepolymerized catalyst (XP) is usually carried out after removing hydrocarbon, which is a dispersion medium, from the resulting suspension of the prepolymerized catalyst by, for example, filtration.

The drying of the prepolymerized catalyst (XP) is carried out by maintaining the prepolymerized catalyst (XP) at a temperature in the range of 70°C or lower, preferably 20 to 50°C, under circulation of an inert gas. It is desirable that the amount of volatile components in the resulting dried prepolymerized catalyst be 2.0 wt% or less, preferably 1.0 wt% or less. The amount of the volatile component in the resulting dried prepolymerized catalyst is better as smaller, with no particular lower limit, but it is practically 0.001 wt%. Although depending on the drying temperature, the drying time is usually 1 to 48 hours.

The dried prepolymerized catalyst is excellent in fluidity, thus it can be stably supplied to a polymerization reactor. In addition, when the dried prepolymerized catalyst is used, polymerization can be stably performed since

accompaniment the solvent used for suspension into the gas phase polymerization system is avoided.

[Production method of ethylene polymer]

Next, a method for producing an ethylene polymer according to the present invention will be described. An ethylene polymer is produced by polymerizing (monopolymerizing or copolymerizing) ethylene in the presence of the catalyst for olefin polymerization (X) described above. By using the catalyst for olefin polymerization (X), a low-density ethylene copolymer that has excellent forming processability and mechanical strength and has a large number of long chain branches can be efficiently produced with a high polymerization activity. The ethylene polymer according to the present invention refers to one having an ethylene content in the polymer of 10 mol % or more.

In the present invention, the polymerization can be carried out either by a liquid-phase polymerization method such as a dissolution polymerization or a suspension polymerization, or by a gas phase polymerization method. The prepolymerized catalyst (XP) is preferably used in the suspension polymerization method and the gas phase polymerization method.

Specific examples of the inert hydrocarbon medium used in the liquid phase polymerization method include aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; halogenated hydrocarbons such as ethylene chloride, chlorobenzene, and dichloromethane; and a mixture of these. In the liquid phase polymerization method, olefin itself can be used as a solvent.

When performing polymerization of ethylene using the above-mentioned catalyst for olefin polymerization, the component (A) is used in an amount so as to be usually $1 \times 10^{-12}$ to $1 \times 10^{-1}$ mole, preferably $1 \times 10^{-8}$ to $1 \times 10^{-2}$ mole per 1 liter of the reaction volume. Further, the component (C) is used, and in particular, the organoaluminum compound represented by the formula (3) in (c-1) is preferably used.

The temperature for polymerization of ethylene using the prepolymerized catalyst (XP) is usually in the range of -50 to +200°C, preferably 0 to 170°C, and particularly preferably 60 to 170°C. The polymerization pressure is usually under conditions of normal pressure to 100 kgf/cm$^2$, preferably normal pressure to 50 kgf/cm$^2$. The polymerization reaction can be performed by any of batchwise, semi-continuous, and continuous methods. It is possible to perform the polymerization at two or more divided stages with different reaction conditions.

The molecular weight of the resulting polymer can be adjusted by introducing hydrogen into the polymerization system or changing the polymerization temperature. In general, the greater the low molecular weight component, the greater the adhesion to the wall of the polymerization reactor and the stirring blade, which may result in a decrease in productivity due to the load on the cleaning process. At the time of polymerization, the component (G) may be coexisted to reduce fouling or improve particle properties.

The monomer supplied with ethylene in the copolymerization reaction in the present invention is one or more monomers selected from α-olefins having 4 to 10 carbon atoms, preferably α-olefins having 6 to 10 carbon atoms. Specific examples of the α-olefins having 4 to 10 carbon atoms include propylene, 1-butene, 1-pentene, 1-hexene, 4-methyl-1-pentene, 1-octene, and 1-decene. A monomer other than ethylene and α-olefins having 4 to 10 carbon atoms may be supplied in a range that does not impair the effect of the present invention, or may not be supplied.

By blending the ethylene-α-olefin copolymer according to the present invention with a thermoplastic resin other than the ethylene-α-olefin copolymer according to the present invention (hereinafter referred to as "additional thermoplastic resin"), a thermoplastic resin composition having excellent formability and excellent mechanical strength is obtained. The blend ratio of the ethylene-α-olefin copolymer according to the present invention to additional thermoplastic resin (mass of ethylene-α-olefin copolymer/mass of additional thermoplastic resin) is usually 99.9/0.1 to 0.1/99.9.

Examples of the additional thermoplastic resin include crystalline thermoplastic resins such as a polyolefin, a polyamide, a polyester, and a polyacetal; and non-crystalline thermoplastic resins such as a polystyrene, an acrylonitrile-butadiene styrene copolymer (ABS), a polycarbonate, a polyphenylene oxides, and a polyacrylate. A polyvinyl chloride is also preferably used.

Specific examples of the polyolefin include an ethylene polymer, a propylene polymer, a butene polymer, a 4-methyl-1-pentene polymer, a 3-methyl-1-butene polymer, and a hexene polymer. Among them, an ethylene polymer, a propylene polymer, and a 4-methyl-1-pentene polymer are preferred. When the polymer is an ethylene polymer, the polymer may be a conventional ethylene polymer or an ethylene/polar group-containing vinyl copolymer, but the conventional ethylene polymer is more preferred. The ethylene polymer and the propylene polymer may be an ethylene polymer and a propylene polymer, respectively, containing a biomass-derived monomer.

The ethylene-α-olefin copolymer according to the present invention may contain an additive such as a weathering stabilizer, a heat stabilizer, an antistatic agent, an anti-slip agent, an anti-blocking agent, an anti-fogging agent, a lubricant, a pigment, a dye, a nuclear agent, a plasticizer, an anti-aging agent, a hydrochloric acid absorber, or an antioxidant, as appropriate, to the extent that the purpose of the present invention is not impaired.

The ethylene-α-olefin copolymer according to the present invention may include at least one or more types of

constitutional units derived from a biomass-derived ethylene or α-olefin. The monomers of the same kinds constituting the polymer may be only biomass-derived monomers, may be only fossil fuel-derived monomers, or may include both biomass-derived monomers and fossil fuel-derived monomers. The biomass-derived monomer is a monomer derived from any renewable natural raw materials such as the ones derived from plants or derived from animals, including fungi, yeasts, algae, and bacteria, and residues thereof. The monomer contains 14C isotopes as carbon at a ratio of about $1 \times 10^{-12}$, and has a biomass carbon concentration (pMC) of about 100 (pMC) as measured in accordance with ASTM D6866. Biomass-derived ethylene and α-olefin are obtained by, for example, conventionally known methods. It is preferred from the viewpoint of reducing the environmental load that the ethylene-α-olefin copolymer according to the present invention contain a constitutional unit derived from a biomass-derived monomer.

[Use]

The ethylene-α-olefin copolymer according to the present invention or the thermoplastic resin composition including the ethylene-α-olefin copolymer is processed into a shaped article, preferably a film, having excellent mechanical strength, and well-balanced transparency and blocking resistance is obtained with excellent formability.

The ethylene-α-olefin copolymer according to the present invention or the thermoplastic resin composition including the ethylene-α-olefin copolymer is processed by, for example, common film forming, sheet molding, blow molding, injection molding, or extrusion molding. Examples of the film forming include extrusion lamination, film formation with a T die, and inflation molding (air cooling, water cooling, multistage cooling, or high-speed processing). The obtained film can be used as a single layer film, but various functions can be further imparted thereto when the film is formed into a multilayer film. Examples of techniques for forming such a film include a co-extrusion A lamination technique such as extrusion lamination or dry lamination enables lamination on paper or a barrier film such as an aluminum foil, a vapor-deposited film, or a coating film that is difficult to coextrude. A multilayer structure can be formed by coextrusion in blow molding, injection molding, or extrusion molding as well as in the film forming to produce a highly functional product.

Examples of the shaped article obtained by processing the ethylene-α-olefin copolymer according to the present invention or the thermoplastic resin composition containing the ethylene-α-olefin copolymer include a film, a sheet, a blown infusion solution bag, a blown bottle, a gasoline tank, a tube by extrusion molding, a pipe, a wire coating, a tear off cap, an injection molded product such as a household article, a fiber, and a large molded product obtained by rotational molding.

Further, the film obtained by processing the ethylene-α-olefin copolymer according to the present invention or the thermoplastic resin composition including the ethylene-α-olefin copolymer is suitable for applications including various films for packaging such as a bag for water-containing product, a bag for liquid soup packaging, a paper container for liquid, an original laminated fabric, a specially shaped bag for liquid packaging (such as a standing pouch), a standard bag, a heavy-duty bag, a wrap film, a sugar bag, a bag for oil-containing product, and food packaging; and also suitable for a protective film, an infusion solution bag, an agricultural material, a bag-in-box, and a clean film used for packaging a semiconductor material, a pharmaceutical product, or food. The film above can also be used as a multilayer film by laminating it with a substrate such as a nylon, polyester, or polyolefin film.

The raw material of the substrate of the multilayer film may contain an ethylene polymer or a propylene polymer including a biomass-derived monomer.

Examples

Hereinafter, the present invention will be described further specifically by Examples. However, the present invention is not limited to the description of the following Examples.

[Measurement or evaluation methods]

In the following Examples, various physical properties of the ethylene-α-olefin copolymers, for example, were measured by the method described in "Description of Embodiments". For the evaluation methods which are not described in "Description of Embodiments", the following method was employed.

Inflation Molding Evaluation:

A film with a thickness of 40 μm was obtained from an ethylene polymer under conditions of a die temperature of 190°C, an extrusion amount of 29 kg/hr, and a tube width of 320 mm using an extruder with a diameter of 50 mmφ and an inflation molding machine with a diameter of 100 mm manufactured by Sumitomo Heavy Industries Modern, Ltd. The following items were measured for the obtained film.

[Haze]

The total haze of the obtained film was measured in accordance with JIS 7136.

[Internal Haze]

The obtained film was placed in a cell filled with cyclohexanol and measured in accordance with JIS 7136.

[Gross 20°]

The gross of the film obtained was measured at an incident angle of 20°in accordance with JIS Z8741.

[Tensile modulus]

Tensile modulus in the MD direction and the TD direction of the obtained film was measured at a test speed of 200 mm/min in accordance with JIS K6781.

[Dart impact]

In accordance with ASTM D1709, method A, the obtained film was clamped by a pneumatic clamping system, a hemispherical dart was dropped from a fixed height, and the load at which 50% of the film was broken was read out from a graph.

[Blocking Force]

A test specimen obtained by layering two inner surfaces of two tubular films obtained was subjected to a load of 10 kg at 50°C and aged for 3 days. The test specimen was then cut into 200 mm widths, and the force required to pull apart at 200 mm/min at 23°C was measured as a blocking force.

[Materials used]

Transition metal compound (A), transition metal compounds (B), and components (G) used in Examples were as follows.

Transition metal compound (A-1): dimethylsilylene (2-indenyl)(4-(3,5-di-tert-butyl-4-methoxyphenyl)-7-methoxy-1-indenyl)zirconium dichloride [synthesized by the method described in patent literature JP2019-059933A.]
Transition metal compound (B-1): dimethylsilylene (3-n-propylcyclopentadienyl)(cyclopentadienyl)zirconium dichloride [synthesized based on the method described in patent literature JP5455354B.]
Transition metal compound (B-2): isopropylidene (cyclopentadienyl)(2,7-di-tert-butylfluoroenyl)zirconium dichloride [synthesized by the method described in patent literature JPH4-069394A.]

Component (G-1): Lauryl diethanolamine (manufactured by Kao Corporation)
Component (G-2): EMULGEN(R) 108 (manufactured by Kao Corporation)

<Synthesis of prepolymerized catalyst (XP-1)>

In a reactor of an inner volume of 270 L with an agitator, 10 kg of silica (average particle size 70 pm, specific surface area 340 $m^2/g$, pore volume 1.3 $cm^3/g$, calcined at 250°C) manufactured by FUJI SILYSIA CHEMICAL LTD. as a solid support (S) was suspended in 77 L of toluene under a nitrogen atmosphere, and then the suspension was cooled to 0 to 5°C. To this suspension, 20.4 L of a solution of methylaluminoxane in toluene (3.5 mol/L in terms of Al atom) as a component (C) was added dropwise over 30 minutes. At this time, the temperature in the system was maintained at 0 to 5°C. The mixture was then reacted at 0 to 5°C for 30 minutes, then the temperature was raised to 95 to 100°C over about 1.5 hours, and then the mixture was reacted at 95 to 100°C for 4 hours. The temperature was then cooled to room temperature, the supernatant was removed off by decantation, and the residue was washed twice with toluene, and then a total amount of 58.0 L of toluene slurry was prepared. A part of the resulting slurry components was collected and the concentrations were examined, and, as a result, the slurry concentration was 248.0 g/L and the Al concentration was 1.21 mol/L.
Then, to a fully nitrogen-substituted reactor of an inner volume of 114 L with an agitator, 6.1 L of the toluene

slurry obtained above and 21.9 L of toluene were charged, and 5.4 L of a solution of 8 mM transition metal compound (A-1) in toluene was added. They were brought into contact with each other at the inner system temperature of 20 to 25°C for 1 hour, then the supernatant was removed off by decantation, and the residue was washed twice with hexane, and then a total amount of 30.9 L of slurry was prepared. While adjusting the resulting slurry at 10 to 15°C, 3.1 L of a solution of 0.92 M diisobutylaluminum hydride in hexane was added, ethylene gas was started to supply at a flow rate of 0.74 kg/hr, and 34.3 mL of 1-hexene was added, then the mixture was started to be heated up. While adjusting the inner system temperature at 32 to 38°C, 34.3 mL of 1-hexene was added every hour for a total of 5 times. After 6 hours from the start of the ethylene supply, when the amount of ethylene supply reached 4.5 kg, the ethylene supply was stopped. The system was then fully substituted with nitrogen, the supernatant was removed off by decantation, and the residue was washed four times with hexane, and then a total amount of 21.9 L of slurry was prepared. While maintaining the resulting slurry at 35 to 40°C, 6.1 L of a solution of 10 g/L component (G-1) in hexane was added and they were brought into contact with each other for 2 hours. The whole amount of the resulting slurry was then loaded into an evaporative dryer of an inner volume of 43 L with an agitator under a nitrogen atmosphere, and then the pressure in the dryer was reduced to -68 kPaG over about 60 minutes. After the pressure reached -68 kPaG, the slurry was dried under vacuum for about 4.3 hours to remove off the volatile content in hexane and prepolymerized catalyst components. The pressure was further reduced to -100 kPaG, and after the pressure reached -100 kPaG, the slurry was dried under vacuum for 8 hours to obtain 6.2 kg of a prepolymerized catalyst (XP-1). A part of the obtained prepolymerized catalyst (XP-1) was collected to examine the composition, and it was found that the content of Zr atom per g of the prepolymerized catalyst component was 0.56 mg.

<Synthesis of prepolymerized catalyst (XP-2)>

In a reactor of an inner volume of 270 L with an agitator, 10 kg of silica (average particle size 70 pm, specific surface area 340 $m^2/g$, pore volume 1.3 $cm^3/g$, calcined at 250°C) manufactured by FUJI SILYSIA CHEMICAL LTD. as a solid support (S) was suspended in 77 L of toluene under a nitrogen atmosphere, and then the suspension was cooled to 0 to 5°C. To this suspension, 20.4 L of a solution of methylaluminoxane in toluene (3.5 mol/L in terms of Al atom) as a component (C) was added dropwise over 30 minutes. At this time, the temperature in the system was maintained at 0 to 5°C. The mixture was then reacted at 0 to 5°C for 30 minutes, then the temperature was raised to 95 to 100°C over about 1.5 hours, and then the mixture was reacted at 95 to 100°C for 4 hours. The temperature was then cooled to room temperature, and the supernatant was removed off by decantation, and the residue was washed twice with toluene, and then a total amount of 58.0 L of toluene slurry was prepared. A part of the resulting slurry components was removed and the concentrations were examined, and, as a result, the slurry concentration was 248.0 g/L and the Al concentration was 1.21 mol/L.

Then, to a fully nitrogen-substituted reactor of an inner volume of 114 L with an agitator, 6.1 L of the toluene slurry obtained above and 22.7 L of toluene were charged, and 0.6 L of a solution of 8 mM transition metal compound (B-1) in toluene and 3.9 L of a solution of 8 mM transition metal compound (B-2) in toluene were added. They were brought into contact with each other at an inner system temperature of 20 to 25°C for 1 hour, then the supernatant was removed off by decantation, and the residue was washed twice with hexane, and then a total amount of 29.8 L of slurry was prepared. While adjusting the resulting slurry at 35 to 40°C, 4.0 L of a solution of 0.92 M diisobutylaluminum hydride in hexane was added, and ethylene gas was started to supply at a flow rate of 0.91 kg/hr. After 5 hours from the start of the ethylene supply, when the amount of ethylene supply reached 4.6 kg, the ethylene supply was stopped. The system was then fully substituted with nitrogen, the supernatant was removed off by decantation, and the residue was washed four times with hexane, and then a total amount of 21.7 L of slurry was prepared. While maintaining the resulting slurry at 35 to 40°C, 3.8 L of a solution of 10 mg/mL component (G-2) in hexane was added and they were brought into contact with each other for 2 hours. The whole amount of the resulting slurry was then loaded into an evaporative dryer of an inner volume of 43 L with an agitator under a nitrogen atmosphere, and then the pressure in the dryer was reduced to -68 kPaG over about 60 minutes. After the pressure reached -68 kPaG, the slurry was dried under vacuum for about 4.3 hours to remove off the volatile content in hexane and prepolymerized catalyst components. The pressure was further reduced to - 100 kPaG, and after the pressure reached -100 kPaG, the slurry was dried under vacuum for 8 hours to obtain 6.1 kg of a prepolymerized catalyst (XP-2). A part of the obtained prepolymerized catalyst (XP-2) was collected to examine the composition, and it was found that the content of Zr atom per g of the prepolymerized catalyst component was 0.52 mg.

<Synthesis of prepolymerized catalyst (XP-3)>

The same operation was performed as the synthesis of the prepolymerized catalyst (XP-2) except that, in the synthesis of the prepolymerized catalyst (XP-2), the addition amount of the solution of 8 mM transition metal compound (B-1) in toluene was changed to 1.1 L and the addition amount of the solution of 8 mM transition metal compound (B-2) in toluene was changed to 3.4 L to obtain 6.1 kg of the prepolymerized catalyst (XP-3).

<Production of ethylene polymer>

[Example 1]

An ethylene polymer was produced by a gas phase polymerization process using a fluidized bed gas phase polymerization reactor. To the reactor, 24 kg of spherical ethylene polymer particles with an average particle size of 900 um were charged in advance, then nitrogen was supplied to form a fluid bed. After that, ethylene, hydrogen, 1-hexene, a prepolymerized catalyst, and electrostripper(R) EA were continuously supplied to prepare a steady state under polymerization conditions shown in Table 1. The polymerization reaction products were continuously taken out from the reactor and dried in a drying apparatus to obtain a powder of ethylene polymer.

To the powder of the obtained ethylene polymer, 850 ppm of SUMILIZER(R) GP (manufactured by Sumitomo Chemical Co., Ltd.) and 210 ppm of calcium stearate (manufactured by Nitto Chemical Industry Co., Ltd.) were added as heat stabilizers. The mixture was melted and kneaded at a set temperature of 200°C and a screw speed of 300 rpm using a co-rotating biaxial 46 mmφ extruder manufactured by Ikegai Corp, then extruded into a strand, and cut to obtain pellets. The obtained pellets, as a measurement sample, were subjected to physical property measurements. The measurement results are shown in Table 9.

Further, the inflation molding evaluation described above was performed using the obtained pellets. The results are shown in Table 10.

[Examples 2 to 5 and Comparative Examples 1 to 2]

Powders of the ethylene polymer were obtained in the same manner as in Example 1, except that the polymerization conditions were changed as described in Table 8. Further, with the obtained powders, various measurements and evaluations were performed. The results are shown in Tables 9 and 10. Note that Chemistat(R) 2500 (manufactured by SANYO CHEMICAL INDUSTRIES, LTD.), an ingredient that was not used in Example 1, is listed in Table 8.

[Comparative Example 3]

Inflation molding was performed in the same manner as in Example 1 using Suntec-LD M2504 (density: 927 kg/$m^3$, MFR: 0.4 g/10 minutes), which is a high-pressure low-density polyethylene manufactured by Asahi Kasei Corporation. The results of inflation molding evaluation are shown in Table 10.

[Comparative Example 4]

Inflation molding was performed in the same manner as in Example 1 using Suntec-LD M2102 (density: 922 kg/$m^3$, MFR: 0.2 g/10 minutes), which is a high-pressure low-density polyethylene manufactured by Asahi Kasei Corporation. The molten film was broken, and unable to collect a film having a thickness of 40 μm.

Table 8

| | | | Example 1 | Example 2 | Example 3 | Example 4 | Example 5 | Comparative Example 1 | Comparative Example 2 |
|---|---|---|---|---|---|---|---|---|---|
| Polymerization conditions | Prepolymerized catalyst component | No. | XP-1 | XP-1 | XP-1 | XP-1 | XP-1 | XP-2 | XP-3 |
| | Prepolymerized catalyst supply rate | g/h | 7.2 | 8.8 | 6.0 | 8.5 | 3.6 | 6.3 | 3.4 |
| | Ethylene supply rate | $Nm^3/h$ | 8.5 | 10.5 | 10.5 | 6.0 | 8.8 | 5.7 | 5.8 |
| | Hydrogen supply rate | $Nm^3/h$ | No supply | 0.0300 | 0.0260 | 0.0370 | 0.0085 | 0.0150 | 0.0230 |
| | 1-Hexene supply rate | kg/h | 1.30 | 1.00 | 0.80 | 0.60 | 0.18 | 0.69 | 0.65 |
| | Polymerization temperature | °C | 71 | 75 | 75 | 75 | 80 | 75 | 80 |
| | Polymerization pressure | MPa•G | 1.7 | 2.0 | 2.0 | 1.7 | 2.0 | 1.7 | 1.7 |
| | Ethylene partial pressure | MPa•A | 1.0 | 1.5 | 1.5 | 1.0 | 1.5 | 1.0 | 1.0 |
| | Electrostripper EA supply rate | g/h | 0.065 | 0.126 | 0.121 | 0.051 | - | - | - |
| | Chemistat 2500 supply rate | g/h | - | - | - | - | 0.145 | 0.660 | 0.710 |
| | Gas linear velocity | m/s | 0.70 | 0.70 | 0.70 | 0.70 | 0.70 | 0.70 | 0.70 |
| | Residence time | h | 3.7 | 3.2 | 4.9 | 8.0 | 7.3 | 4.2 | 4.2 |
| | Gas phase: Hydrogen/ethylene ratio | Molar ratio ($\times 10^{-4}$) | 6 | 15 | 10 | 16 | 10 | 39 | 30 |
| | Gas phase: 1-Hexene/ethylene ratio | Molar ratio | 0.009 | 0.009 | 0.008 | 0.007 | 0.006 | 0.006 | 0.007 |
| Polymer yield | | kg/h | 6.5 | 7.4 | 4.9 | 3.0 | 3.3 | 5.8 | 5.8 |

Table 9

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Density | $kg/m^3$ | 905 | 911 | 913 | 909 | 921 | 920 | 922 | 927 | 922 |
| MFR (190°C, 2.16 kq) | g /10 min | 0.71 | 1.81 | 0.45 | 1.18 | 0.7 | 0.6 | 2.9 | 0.4 | 0.2 |
| MT (190°C) | g | 15.1 | 9.1 | 14.9 | 10.7 | 15.7 | 12.3 | 11.7 | 17.2 | >20 (Breaking) |
| [η] | dl/g | 1.54 | 1.33 | 1.55 | 1.43 | 1.51 | 1.58 | 1.39 | | |
| η* | P | 7.83E+04 | 4.49E+04 | 1.05E+05 | 6.15E+04 | 7.61E+04 | 7.94E+04 | 2.98E+04 | 1.05E+04 | 1.35E+04 |
| MT/η* | g/P | 1.93E-04 | 2.02E-04 | 1.42E-04 | 1.74E-04 | 2.06E-04 | 1.55E-04 | 3.94E-04 | 1.65E-03 | >1.48E-03 |
| η0 | P | 4.00E+05 | 1.30E+05 | 5.00E+05 | 2.26E+05 | 3.50E+05 | 5.70E+05 | 1.10E+05 | | |
| [η] /Mw^0.776x10^4 | | 0.94 | 1.01 | 1.00 | 0.83 | 0.86 | 1.27 | 0.96 | | |
| η0/Mw^3.4x10^13 | | 1.34 | 1.18 | 2.19 | 0.62 | 0.87 | 6.43 | 0.65 | | |
| GPC-visco | | | | | | | | | | |
| Mn | | 2.56E+04 | 2.22E+04 | 2.51E+04 | 2.24E+04 | 3.32E+04 | 2.20E+04 | 2.10E+04 | | |
| Mw | | 2.72E+05 | 2.02E+05 | 2.51E+05 | 2.88E+05 | 2.96E+05 | 1.90E+05 | 2.30E+05 | | |
| Mz | | 1.88E+06 | 1.70E+06 | 1.59E+06 | 2.83E+06 | 2.22E+06 | 1.20E+06 | 1.90E+06 | | |
| Mw/Mn | | 10.63 | 9.13 | 9.99 | 12.88 | 8.92 | 8.8 | 10.9 | | |
| Mz/Mw | | 6.94 | 8.41 | 6.32 | 9.82 | 7.51 | 6.31 | 8.46 | | |
| Mz/Mw-Mw/Mn | | -3.69 | -0.72 | -3.67 | -3.06 | -1.41 | -2.49 | -2.44 | | |
| DSC melting curve peak | | Multiple | Multiple | Multiple | Multiple | Multiple | Multiple | Single | | |

Table 10

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Density | kg/m$^3$ | 905 | 911 | 913 | 909 | 921 | 920 | 922 | 927 | 922 |
| MFR (190°C, 2.16 kg) | g/10 min | 0.71 | 1.81 | 0.45 | 1.18 | 0.70 | 0.6 | 2.9 | 0.4 | 0.2 |
| Inflation molding film physical properties | | | | | | | | | | |
| Film thickness | μm | 40 | 40 | 40 | 40 | 40 | 40 | 40 | 40 | 40 |
| Haze | % | 49 | 20 | 51 | 36 | 44 | 74 | 73 | 10.4 | Breaking of film Unable to make film |
| Internal haze | % | 1.2 | 0.8 | 1.1 | 0.7 | 1.2 | 1.9 | 1.8 | 0.5 | |
| Gross 20° | % | 1.1 | 5.9 | 1.1 | 1.9 | 1.0 | 0.5 | 0.6 | 24 | |
| Dart impact (Method A) | g | 430 | 415 | 380 | 491 | 146 | 166 | 161 | 85 | |
| Tensile modulus MD | MPa | 132 | 188 | 207 | 164 | 352 | 323 | 364 | 505 | |
| Tensile modulus TD | MPa | 165 | 231 | 288 | 201 | 498 | 477 | 497 | 768 | |
| Blocking test (50°C × 10 kg load × after 3 days) | | | | | | | | | | |
| Blocking force | mN | 43 | 51 | 0 | 48 | 0 | 0 | 0 | 38 | |

As shown in Table 10, Examples have excellent film transparency compared to Comparative Examples 1 and 2, excellent film mechanical strength (dart impact) compared to Comparative Examples 3, and excellent formability of polymer compared to Comparative Examples 4.

## Claims

1. An ethylene-α-olefin copolymer which is a copolymer of ethylene and one or more α-olefins having 4 to 10 carbon atoms, and which satisfies the following requirements (1) to (6) :

   (1) the density is in a range of 890 kg/$m^3$ or more and 925 kg/$m^3$ or less;
   (2) the melt flow rate (MFR) at 190°C and 2.16 kg load is in a range of 0.1 g/10 minutes or more and less than 3.0 g/10 minutes;
   (3) the ratio [MT/η* (g/P)] of the melt tension [MT (g)] at 190°C to the shear viscosity [η* (P)] at 200°C and the angular velocity of 1.0 rad/s is in a range of $1.20 \times 10^{-4}$ or more and $2.90 \times 10^{-4}$ or less;
   (4) the zero shear viscosity [$\eta_0$ (P)] at 200°C and the weight-average molecular weight (Mw) measured by GPC-viscometry (GPC-VISCO) satisfy the following equation (Eq-1):

   $$0.01 \times 10^{-13} \times Mw^{3.4} \leq \eta_0 \leq 3.5 \times 10^{-13} \times Mw^{3.4} \quad (Eq\text{-}1);$$

   (5) the number-average molecular weight (Mn), the weight-average molecular weight (Mw), and the Z-average molecular weight (Mz), which are measured by GPC-viscometry (GPC-VISCO), satisfy the following equation (Eq-2):

   $$-7.0 \leq Mz/Mw - Mw/Mn \leq 2.0 \quad (Eq\text{-}2);$$

   (6) the melting curve obtained by differential scanning calorimetry (DSC) has multiple peaks.

2. The ethylene-α-olefin copolymer according to claim 1, further satisfying the following requirement (7):
   (7) the ratio Mz/Mw of the Z-average molecular weight (Mz) to the weight-average molecular weight (Mw), which are measured by GPC-viscometry (GPC-VISCO), is in a range of 4.0 or more and 15.0 or less.

3. The ethylene-α-olefin copolymer according to claim 1 or 2, further satisfying the following requirement (8):
   (8) the intrinsic viscosity [[η] (dl/g)] measured in decalin at 135°C and the weight-average molecular weight (Mw) measured by GPC-viscometry (GPC-VISCO) satisfy the following equation (Eq-3):

   $$0.7 \times 10^{-4} \times Mw^{0.776} \leq [\eta] \leq 1.65 \times 10^{-4} \times Mw^{0.776} \quad (Eq\text{-}3).$$

4. A thermoplastic resin composition comprising: the ethylene-α-olefin copolymer according to any one of claims 1 to 3; and a thermoplastic resin other than the ethylene-α-olefin copolymer.

5. A film comprising the ethylene-α-olefin copolymer according to any one of claims 1 to 3.

6. A multilayer film comprising a layer comprising the ethylene-α-olefin copolymer according to any one of claims 1 to 3.

## INTERNATIONAL SEARCH REPORT

International application No.
**PCT/JP2022/015847**

**A. CLASSIFICATION OF SUBJECT MATTER**

***B32B 27/32***(2006.01)i; ***C08F 210/16***(2006.01)i; ***C08L 23/08***(2006.01)i
FI: C08F210/16; C08L23/08; B32B27/32 103

According to International Patent Classification (IPC) or to both national classification and IPC

**B. FIELDS SEARCHED**

Minimum documentation searched (classification system followed by classification symbols)

C08F210; C08L23

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-515114 A (THE DOW CHEMICAL CO.) 18 September 2001 (2001-09-18) claims, paragraphs [0001], [0044], [0100], examples 1-3 | 1-6 |
| X | JP 2018-115268 A (TOSOH CORP.) 26 July 2018 (2018-07-26) claims, paragraphs [0007], [0018], [0032], example 1 | 1-3, 5, 6 |
| Y | | 1-3, 5, 6 |
| X | JP 2017-66182 A (JAPAN POLYETHYLENE CORP.) 06 April 2017 (2017-04-06) claims, paragraphs [0027], [0083], example 1 | 1-6 |
| Y | JP 2019-59933 A (MITSUI CHEMICALS INC) 18 April 2019 (2019-04-18) claims, paragraph [0175], examples | 1-6 |
| Y | JP 2019-59723 A (MITSUI CHEMICALS INC.) 18 April 2019 (2019-04-18) claims, paragraph [0182], examples | 1-6 |
| Y | JP 11-222505 A (TOSOH AKZO CORP.) 17 August 1999 (1999-08-17) paragraph [0003] | 1-6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/015847**

**C. DOCUMENTS CONSIDERED TO BE RELEVANT**

| Category* | Citation of document, with indication, where appropriate, of the relevant passages | Relevant to claim No. |
|---|---|---|
| Y | JP 2009-144148 A (MITSUI CHEMICALS INC.) 02 July 2009 (2009-07-02) paragraphs [0004]-[0006] | 1-6 |
| Y | JP 63-37149 A (EXXON CHEMICAL PATENTS INC.) 17 February 1988 (1988-02-17) page 2 | 1-6 |
| Y | JP 10-506952 A (BOREALIS A/S) 07 July 1998 (1998-07-07) page 5, lines 1-3 | 1-6 |
| Y | JP 2019-143160 A (NIVATION TECHNOLOGIES, LLC) 29 August 2019 (2019-08-29) claims, paragraph [0111] | 1-3, 5, 6 |

Form PCT/ISA/210 (second sheet) (January 2015)

**INTERNATIONAL SEARCH REPORT**
**Information on patent family members**

International application No.
**PCT/JP2022/015847**

| Patent document cited in search report | Publication date (day/month/year) | Patent family member(s) | Publication date (day/month/year) |
|---|---|---|---|
| JP 2001-515114 A | 18 September 2001 | US 2003/0022998 A1<br>claims, paragraphs [0001], [0077], [0247], examples 1-3<br>WO 1999/009096 A1<br>EP 1003812 A1<br>CN 1267315 A<br>KR 10-0556319 B1 | |
| JP 2018-115268 A | 26 July 2018 | (Family: none) | |
| JP 2017-66182 A | 06 April 2017 | (Family: none) | |
| JP 2019-59933 A | 18 April 2019 | (Family: none) | |
| JP 2019-59723 A | 18 April 2019 | (Family: none) | |
| JP 11-222505 A | 17 August 1999 | (Family: none) | |
| JP 2009-144148 A | 02 July 2009 | US 2010/0292421 A1<br>paragraphs [0004]-[0006]<br>WO 2009/066689 A1<br>EP 2218725 A1<br>KR 10-2010-0076056 A<br>CN 101868471 A | |
| JP 63-37149 A | 17 February 1988 | US 4722971 A<br>column 1, lines 9-36<br>EP 227206 A1<br>KR 10-1987-0002190 A | |
| JP 10-506952 A | 07 July 1998 | US 6300420 B1<br>column1, lines 40-44<br>EP 785954 A1<br>CN 1163621 A | |
| JP 2019-143160 A | 29 August 2019 | US 2016/0347886 A1<br>claims, paragraph [0112]<br>EP 3105257 A1<br>CN 105980423 A<br>KR 10-2016-0119801 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H07026079 A
- JP H02276807 A
- JP H04213309 A
- WO 9308221 A
- JP H08311260 A
- JP 2006233207 A
- JP 2008031380 A
- JP 2009197225 A
- JP 2006509059 A
- WO 2009080216 A
- JP 2011500800 A
- JP 2012012307 A
- JP 2012121882 A
- JP 2014196319 A
- JP 2014513735 A
- JP 2015063495 A
- JP 2016501952 A
- JP 2019059933 A
- JP H10109996 A
- JP 2011502192 A
- WO 2014123212 A
- JP H0742301 B
- JP H06220126 A
- JP H06220128 A
- JP H11140113 A
- JP H11310607 A
- JP 2000038410 A
- JP 2000095810 A
- WO 201055652 A
- JP 2003171412 A
- JP H01501950 A
- JP H01502036 A
- JP H03179005 A
- JP H03179006 A
- JP H03207703 A
- JP H03207704 A
- US 5321106 B
- JP 5455354 B
- JP H4069394 A

### Non-patent literature cited in the description

- **WALTER KAMINSKY.** *Makromol. Chem.,* 1992, vol. 193, 606
- **KAZUO SOGA et al.** Catalytic Olefin Polymerization. KODANSHA SCIENTIFIC LTD, 1990, 376
- **KAZUO MATSUURA et al.** Polyethylene Technique Reading Book. Kogyo Chosakai Publishing Co., Ltd, 2001, 32, , 36
- **C GABRIEL ; H. MUNSTEDT.** *J. Rheol,* 2003, vol. 47 (3), 619
- **F.N. COGSWELL.** Polymer Melt Rheology. Wiley, 1981
- **WALTHER BURCHARD.** ADVANCES IN POLYMER SCIENCE. *Branched Polymer,* 1999, vol. 143, 137
- *Organometallics,* 1994, vol. 13, 954
- *Organometallics,* 2006, vol. 25, 1217
- *Bioorg. Med. Chem.,* 2008, vol. 16, 7399
- *Organometallics,* vol. 30, 5744
- *Organometallics,* 2012, vol. 31, 4962
- *Chem. Eur. J.,* 2012, vol. 18, 4174
- *Macromolecules,* 2001, vol. 34, 2072
- *Macromolecules,* 2003, vol. 36, 9325
- *Organometallics,* 2004, vol. 23, 5332
- *Eur. J. Inorg. Chem.,* 2005, 1003
- *Eur. J. Inorg. Chem.,* 2009, 1759
- *Organometallics,* 1999, vol. 18, 5347
- *Organometallics,* 2012, vol. 31, 4340